# EUROPÄISCHE PATENTSCHRIFT

(11) **EP 2 434 276 B1**
(45) Veröffentlichungstag und Bekanntmachung des Hinweises auf die Patenterteilung: **07.08.2019**
(21) Anmeldenummer: 11007816.9
(22) Anmeldetag: 26.09.2011
(51) Int. Cl.: G01N 21/90

(54) **Inspektionsverfahren, Inspektionsstation und Belichtungs- und Auswertevorrichtung**
Inspection procedure, inspection station and illumination and plotting device
Procédé d'inspection, station d'inspection et dispositif d'éclairage et d'évaluation

(30) Priorität: 24.09.2010 DE 102010046461
(43) Veröffentlichungstag der Anmeldung: 28.03.2012
(73) Patentinhaber: Symplex Vision Systems GmbH, 80686 München (DE)
(72) Erfinder: Huhn, Thomas, 80686 München (DE)
(74) Vertreter: Grünecker Patent- und Rechtsanwälte PartG mbB

(56) Entgegenhaltungen:
- EP-A1- 0 763 727
- EP-A1- 0 952 443
- DE-A1- 1 905 050
- DE-A1- 10 140 010
- DE-A1- 19 601 114
- DE-A1- 19 904 732
- US-A1- 2006 126 060
- US-B2- 6 452 156

## Beschreibung

Die Erfindung betrifft ein Inspektionsverfahren zur Prüfung von transparenten oder transluzenten Behältern auf Fehler, wie Sprünge, Risse, Blasen oder dergleichen, wobei diese Behälter von einer Fördereinrichtung entlang einer Fördereinrichtung kontinuierlich gefördert werden und während der Förderung jeder Behälter eine Inspektionsstation durchläuft, in der eine berührungsfreie Inspektion zumindest eines ausgewählten Behälterbereichs stattfindet. Der ausgewählte Behälterbereich wird mit elektromagnetischer Strahlung von wenigstens einer Strahlungsquelle beleuchtet. Die von dem ausgewählten Behälterbereich reflektierte Strahlung wird mittels mindestens einer Sensoreinheit aufgenommen und diese in Inspektionssignale zur Bewertung eventueller Fehler des Behälters umgesetzt.

Weiterhin betrifft die Erfindung eine Inspektionsstation, mittels der das Inspektionsverfahren durchführbar ist sowie eine Belichtungs- und Auswertevorrichtung, die Teil einer solchen Inspektionsstation ist.

Eine entsprechende Inspektionsstation bzw. Inspektionsverfahren mit Belichtungs- und Auswertevorrichtung ist aus der EP 00 61 021 A2 bekannt. Verfahren und Vorrichtung dienen zur Feststellung von Fehler von Glasgegenständen. In dieser Druckschrift wird insbesondere darauf hingewiesen, dass Behälter als Prüflinge sich linear und kontinuierlich und ohne Eigendrehung um ihre Längsachse durch die entsprechende Prüfvorrichtung bewegen. Dabei wird eine Fördereinrichtung in Form eines Horizontalförderers verwendet, auf dem Prüflinge stehen und durch die Prüfvorrichtung gefördert werden. Entsprechende Strahlungsquellen sind entlang der Fördervorrichtung und halbkreisförmig oberhalb der Fördervorrichtung angeordnet, um einen Behälter im Bereich zu seiner Mündung zu bestrahlen. Von Behälter reflektiertes Licht wird mittels eines Empfängers erfasst und anschließend ausgewertet.

Nachteilig bei diesem Verfahren bzw. Vorrichtung ist, dass ein Vergleich von erfassten Prüfsignalen mit bereits abgespeicherten Mustersignalen in aufwendiger Weise und mit schwierigen Einstellungen durchgeführt werden muss.

DE 199 04 732 A1 beschreibt eine Behälterprüfmaschine mit zwei Prüfstationen. Flaschen werden mittels eines Förderers kontinuierlich bewegt. Im Bereich der entsprechenden Prüfstation erfolgt eine Beleuchtung mittels gesteuerter Lichtquellen, wobei von diesen anscheinend für jede Station zwei vorhanden sind. Entsprechend sind auch zwei CCD-Kameras vorhanden, die auch durch paarweise gestapelte CCD-Kameras gebildet sein können. Zwei Ansichten werden bevorzugt gleichzeitig durch die entsprechenden Kameras aufgenommen, wobei auch die Möglichkeit besteht, dass jeweils nur eine Kamera jede Ansicht an jeder Station für jede Prüfung abbilden könnte oder eine einzelne Kamera an jeder Station vorhanden sein könnte, wobei die Kamera in de zweiten Station beide Ansichten mit nacheinander aufgenommenen Bildern in der Flasche zur Wandprüfung und Profilprüfung abbilden könnte.

DE 1 905 050 A1 betrifft eine Flaschenprüfvorrichtung, bei der eine Flasche sowohl gedreht als auch gleichzeitig senkrecht bewegt wird. Jede Flasche wird auf einem Flaschenträger angeordnet, durch den die Flasche um ihre vertikale Achse drehbar ist. Einem bestimmten Teil der Flasche ist eine Lichtquelle zugeordnet, die Licht durch die Flasche bis auf einen Reflektionsschirm und von dort auf einen in der Flasche angeordneten Spiegel richtet. Durch den Spiegel wird das entsprechende Licht auf ein Licht aufnehmendes Element zur Erfassung von Fremdteilen innerhalb der Flasche abgelenkt.

DE 196 01 114 A1 beschreibt eine Vorrichtung zur Prüfung auf lichtreflektierende Fehler bei beispielsweise Flaschen als Prüflingen. Eine Belichtungs- und Auswertevorrichtung weist eine Reihe von Strahlungsquellen und zumindest eine Empfangsvorrichtung auf. Als Strahlungsquellen sind Leuchtdioden einsetzbar. Die entsprechenden Lichtsender rotieren um eine Längsachse. Diese sollen insbesondere auch außerhalb einer entsprechenden Durchlaufgasse positioniert sein.

US 2006/126060 A1 betrifft eine Belichtungs- und Auswertevorrichtung, bei der eine Vielzahl von Beleuchtungseinrichtungen kreisförmig angeordnet sind. Allerdings ist nur eine Kamera vorgesehen. Außerdem erfolgt anscheinend keine sequentielle Ansteuerung bestimmter Strahlungsquellen und zugeordneter Kameras.

EP 0 952 443 A1 beschreibt eine Reihe von Lichtquellen und auch Lichtempfängern. Diese sind gegenüberliegend angeordnet und tasten bei einer rotierenden Flasche deren Mündungsbereich ab. Es erfolgt eine bestimmte Ansteuerung von Lichtquellen und Empfängern.

EP 0 763 727 A1 beschreibt in ähnlicher Weise eine Reihe von Lichtquellen und gegenüberliegenden Empfängern, wobei wiederum eine Flasche sich dreht. Es wird eine sequentielle Schaltung entsprechender Lichtquellen der Empfänger beschrieben.

Der Erfindung liegt die Aufgabe zu Grunde, Inspektionsverfahren, Inspektionsstation bzw. Belichtungs- und Auswertevorrichtung dahingehend zu verbessern, dass in vereinfachter und schneller Weise Fehler eines entsprechenden Behälters sicher erfasst und ausgewertet werden können, wobei auch relativ große Behälterbereiche bei schnell aufeinanderfolgenden Behältern prüfbar sind.

Dies wird erfindungsgemäß durch die Merkmale der Patentansprüche 1 bzw. 14 gelöst. Erfindungsgemäß wird durch zusätzliches und zeitweiliges Anheben bzw. Absenken wenigstens eines Behälters im Wesentlichen senkrecht zur Förderrichtung der ausgewählte Behälterbereich relativ zu benachbarten Behältern zur Beleuchtung mit elektromagnetischer Strahlung zugänglich gemacht. Es erfolgt ein zeitlich sequentielles Bestrahlen des ausgewählten Behälters durch die zumindest zwei insbesondere auf gegenüberliegenden Seiten des Behälters angeordneten Strahlungsquellen währen des Anhebens bzw. Absenkens des wenigstens einen Behälters. Weiterhin erfolgt ein Aufnehmen der von dem wenigstens einen angehobenen bzw. abgesenkten Behälter reflektierten Strahlung durch jeweils zumindest jeder Strahlungsquelle zugeordneten Aufnahmeeinrichtung mit Sensoreinheit. Anschließend erfolgt eine Weiterförderung des Behälters in Förderrichtung mittels der Fördereinrichtung.

Da dieses Bewegen des Behälters senkrecht zur Förderrichtung zusätzlich zur Bewegung in Förderrichtung erfolgt, findet keine Verzögerung des Behälterstroms statt, sondern kontinuierlich während der Förderung der Behälter erfolgt eine entsprechende Inspektion bzw. Überprüfung auf Fehler.

Im Zusammenhang mit Rissen als solchen Fehlern von Behältern sei insbesondere auch darauf verwiesen, dass diese beispielsweise bei Glasbehältern im Durchlicht nicht erkennbar sind. Gerade kleinere Risse stellen auf Grund der sehr dicht beieinander liegenden Grenzflächen ein Problem dar, da diese Grenzflächen leicht von Licht durchdrungen werden können und keine entsprechende Rissprüfung durch Reflektion möglich ist.

Um Risse sichtbar zu machen, müssen Spiegelung oder Reflektionen an entsprechenden Bruchkanten oder Grenzflächen im Riss stattfinden. Die entsprechende Licht- oder Strahlungsquelle muss in diesem Zusammenhang unter dem richtigen Winkel auf die Bruchkante oder Grenzfläche leuchten, um Licht in die Aufnahmeeinrichtung und auf die entsprechende Sensoreinheit zu reflektieren.

Bei den aus der Praxis bekannten Verfahren oder Vorrichtungen erfolgte daher ein Anhalten der entsprechenden Behälter und eine Rotation um die vertikale Achse, um Licht unter verschiedenen Winkeln auf den ausgewählten Behälterbereich einzustrahlen. Die entsprechende Aufnahmeeinrichtung wurde an geeigneter Position im Raum platziert und durch Drehung des Behälters bestand die Möglichkeit, auch mit einer relativ kleinen Anzahl von Strahlungsquellen und Aufnahmeeinrichtungen unterschiedliche Risse zu erkennen.

Allerdings wird durch dieses zeitweilige Anhalten und Rotieren des Behälters der Behälterstrom in seiner Förderung abgestoppt und eine Vielzahl zusätzlicher Einrichtungen sind notwendig, um die entsprechenden Behälter in dieser Weise zu überprüfen.

Erfindungsgemäß ergibt sich als Vorteil, dass der entsprechende Behälter in dem ausgewählten Behälterbereich rundum zugänglich ist, siehe das entsprechende Anheben bzw. Absenken des zu überprüfenden Behälters aus dem übrigen Behälterstrom. In dem Moment des maximalen Anhebens bzw. Absenkens erfolgt die Überprüfung. Diese wird außerdem dadurch verbessert, dass im Wesentlichen in kurzer Zeitabfolge der Behälter entlang seiner Umfangsrichtung überprüft wird, da die entsprechenden Strahlungsquellen beidseitig zum Behälter angeordnet sind und zeitlich sequenziell das Bestrahlen und Aufnehmen der reflektierten Strahlung erfolgt.

Bei dem später dargestellten Ausführungsbeispiel erfolgt ein Anheben des Behälters, wobei allerdings ein entsprechendes Absenken des Behälters zur Überprüfung eines unteren Behälterbereichs analog durchführbar ist.

Nach dem Anheben bzw. Absenken und dem Bestrahlen und Aufnehmen der reflektierten Strahlung erfolgt dann wieder eine Weiterförderung des Behälters in Förderrichtung durch die entsprechende Fördereinrichtung.

Es sind verschiedene Möglichkeiten denkbar, in welcher Weise dieses Anheben oder Absenken erfolgt. Bei einem einfachen Ausführungsbeispiel erfolgt das Anheben oder Absenken des Behälters mittels insbesondere an gegenüberliegenden Seiten des Behälters angreifende Hubelemente. Diese greifen an dem Behälter dort an, wo keine entsprechende Überprüfung stattfinden soll. Durch solche Hubelemente ist sowohl ein Anheben als auch Absenken je nach zu überprüfendem Behälterbereich möglich.

Das Anheben oder Absenken des entsprechenden Behälters erfolgt soweit, das die unmittelbar benachbarten Behälter nicht die freie Ansicht des ausgewählten Behälterbereichs verhindern.

Um in keiner Weise eine Verzögerung des Behälterstroms durch das entsprechende Inspektionsverfahren bzw. Inspektionsstation zu verursachen, bewegen sich die Hubelemente synchron mit der Fördereinrichtung in Förderrichtung. D.h., das Anheben oder Absenken erfolgt zusätzlich zu einer Weiterbewegung des Behälters in Förderrichtung.

Um in einfacher Weise eine solche Mitbewegung mit der Fördervorrichtung zu ermöglichen, kann sich eine Vielzahl von Hubelementen entlang einer geschlossenen Bahn beidseitig zur Fördereinrichtung bewegen. Die geschlossene Bahn weist dabei einen entlang der Fördereinrichtung verlaufenden Hubbahnabschnitt und einen Enden des Hubbahnabschnitts verbindenden Rückführabschnitt auf.

In diesem Zusammenhang besteht auch die Möglichkeit, dass ein entsprechendes Hubelement durch einen umlaufenden Gurt oder Riemen gebildet wird, der einem Teil des Hubbahnabschnitts zugeordnet ist. In diesem Teil wird durch entsprechend gegenüberliegend angeordnete Riemen oder Gurt der Behälter angehoben und dann an den nächstfolgenden Riemen oder Gurt übergeben.

Um in einfacher Weise das Anheben oder Absenken zu ermöglichen, können die Behälter zwischen den angreifenden Hubelementen während im Wesentlichen der Bewegung entlang des Hubbahnabschnitts seitlich eingeklemmt gehalten werden.

Um in diesem Zusammenhang eine Beschädigung des Behälters zu vermeiden, kann jedes Hubelement eine elastische Klemmauflage aufweisen.

Um diese Vielzahl von Einzelelementen zum Anheben und Absenken des Behälters, siehe die Hubelemente, in einfacher Weise zu führen, kann ein jedes Hubelement entlang zumindest des Hubbahnabschnitts zum Anheben und Absenken zwangsgeführt sein.

Eine solche Zwangsführung kann beispielsweise durch eine entsprechende Hubkontur erfolgen, wobei jedes Hubelement einen Nockenfolger aufweist, der entlang einer solchen Hubkontur zum Anheben bzw. Absenken bewegbar ist.

Bei der Verwendung von entsprechenden Hubelementen besteht die Möglichkeit, dass der Behälter beispielsweise gerade zwischen zwei aufeinanderfolgenden Hubelementen eingeklemmt wird. Es ist nicht immer gewährleistet, dass die Behälter auch synchron zu den Hubelementen einfahren, so dass dieser Fall durchaus auftreten kann. Um in diesem Zusammenhang zu verhindern, dass der Behälter nicht sicher durch aufeinanderfolgende Hubelemente ergriffen wird, erfolgt eine entsprechende Zwangsführung zumindest der zwei hintereinander angeordneten Hubelemente entlang zumindest des Hubbahnabschnitts mit Phasenverschiebung zum synchronen Anheben bzw. Absenken dieser hintereinander angeordneten Hubelemente.

Dazu werden vorzugsweise zwei Hubkonturen verwendet, entlang denen der Behälter kontinuierlich angehoben bzw. abgesenkt werden kann, auch wenn er von zwei hintereinander angeordneten Hubelementen ergriffen wird. Die beiden Hubkonturen haben im Wesentlichen den gleichen Verlauf, sind allerdings phasenversetzt zueinander angeordnet. Beim Einlaufen des entsprechenden Behälters in die Inspektionsstation erfolgt ein Erfassen der Position und eine Entscheidung, ob der Behälter gegebenenfalls von zwei Hubelementen erfasst wird. Ist dies der Fall, erfolgt eine entsprechende Ansteuerung eines der Hubelemente, um der anderen Hubkontur zu folgen. D.h., zwei aufeinanderfolgende Hubelemente bewegen sich entlang verschiedener Hubkonturen, d.h. entlang der ersten bzw. zweiten Hubkontur. Durch die entsprechende Ausbildung der Hubkonturen erfolgt außerdem ein kontinuierliches Anheben bzw. Absenken eines jeden Hubelements. In diesem Zusammenhang ist es weiterhin von Vorteil, wenn diese benachbarten Hubelemente synchron zueinander bewegt werden.

Bei dem beschriebenen Ausführungsbeispiel sind die Hubkonturen so ausgebildet, dass das in Förderrichtung hintere Hubelement angesteuert wird, um der zweiten Hubkontur für das Anheben bzw. Absenken zu folgen, während das in Förderrichtung vordere Hubelement der ersten Hubkontur folgt. Selbstverständlich ist auch eine umgekehrte Verstellung der Hubelemente möglich.

Erfindungsgemäß kann in diesem Fall auch bei einem Behälter zwischen zwei aufeinanderfolgenden Hubelementen der entsprechende Behälter sicher auf- und abbewegt werden, um ihn zu überprüfen.

Um eine ausreichend intensive und leicht herstellbare Strahlung in Form von Licht zu erhalten, besteht erfindungsgemäß die Möglichkeit, ein entsprechendes Bestrahlen mittels einer Strahlungsquelle aus einer Mehrzahl von zu Strahlungsquellengruppen zusammengefassten Einzelstrahlungsquellen durchzuführen. Dabei sind diese Einzelstrahlungsquellen in gleicher Weise und auf den gleichen Punkt fokussiert.

Erfindungsgemäß wird eine große Anzahl solcher Einzellichtquellen und entsprechender Aufnahmeeinrichtungen in Form von Kameras verwendet, wodurch eine Detektion von Rissen oder dergleichen am Behälter ohne Drehung und quasi lageunabhängig erfolgen kann.

Dabei ist auch keine strikte vertikale Ausrichtung des Behälters notwendig, so dass das Anheben bzw. Absenken auch unter einem gewissen Winkel zur Vertikalen bzw. zur Senkrechten der Förderrichtung erfolgen kann.

Durch das Anheben oder Absenken ist auf jeden Fall sichergestellt, dass von allen Seiten ein Bestrahlen und Aufnehmen der reflektierten Strahlung möglich ist.

Je nach Anheben oder Absenken des Behälters erweist es sich in diesem Zusammenhang als vorteilhaft, wenn die entsprechenden Strahlungsquellen bzw. Strahlungsquellengruppen oder Einzelstrahlungsquellen in einem entsprechenden Halbraum angeordnet sind. Das heißt, wird beispielsweise der Behälter angehoben, sind die Strahlungsquellen in einem oberen Halbraum angeordnet, und bei einem Absenken entsprechend in einem unteren Halbraum relativ zum Behälter.

Zur Verwendung der verschiedenen Strahlungsquellengruppen ist es weiterhin von Vorteil, wenn jeder dieser Gruppen zumindest eine Kamera mit einer optoelektronischen Sensoreinheit zugeordnet ist. Die entsprechende Kamera empfängt das von der zugeordneten Strahlungsquellengruppe ausgestrahlte und vom Behälter reflektierte Licht.

Allerdings kann die Zuordnung von Kamera und Strahlungsquellengruppe in unterschiedlicher Weise erfolgen. Es muss beispielsweise keine enge räumliche Zuordnung von beiden existieren und es besteht ebenfalls die Möglichkeit, dass im Wesentlichen Strahlungsquellengruppe und zugeordnete Kamera in tangentialer Richtung zum entsprechenden Behälter angeordnet sind.

Erfindungsgemäß kann der Behälter lageunabhängig und rundum überprüft werden. Um zu verhindern, dass sich beispielsweise gegenüberliegende Strahlungsquellen bei der Erfassung eines Fehlers negativ beeinflussen, erfolgt eine sequenziell ablaufende Rundumabtastung.

Um in diesem Zusammenhang in einfacher Weise zu ermöglichen, Behälter mit unterschiedlichen Durchmessern zu überprüfen, ist eine verstellbare oder variable Anordnung jeder Strahlungsquellengruppe mittels eines Gruppenträgers von Vorteil. Es besteht weiterhin die Möglichkeit, dass jeder Gruppenträger aus zwei Unterträgern zusammengesetzt ist, wobei auch jeder Unterträger eine Anzahl von Einzelstrahlungsquellen aufweist. Die Kameras können separat angeordnet sein oder auch bereits am Gruppenträger in spezifischer Ausrichtung zu den Einzelstrahlungsquellen angeordnet sein.

Es besteht weiterhin die Möglichkeit, dass die einzelnen Träger zur Fokussierung aller Lichtquellen des Trägers bewegt werden, um beispielsweise auch weiterhin auf der Oberfläche des Behälters zu fokussieren, wenn dieser einen anderen Durchmesser aufweist.

Weiterhin von Vorteil kann sein, wenn nur die einer Kamera direkt zugewandte Seite des Behälters überprüft wird. Die entsprechende Rückseite des Behälters erweist sich bei einer solchen Überprüfung im entsprechenden Kamerabild als störend, da gegebenenfalls auch dort Reflektionen entstehen können, die allerdings unerwünscht sind.

Daher findet die entsprechende Fokussierung des Lichtes und auch die Bestrahlung mit intensivem Licht statt, um beispielsweise eine scharf umrissene Fläche des Behälters zu beleuchten. In diesem Zusammenhang kann es weiterhin als vorteilhaft betrachtet werden, wenn jede Einzelstrahlungsquelle eine LED ist und auch jeder Einzelstrahlungsquelle eine Blende, insbesondere Rechteckblende zugeordnet ist.

Durch eine solche Fokussierung und intensive Bestrahlung des Behälters kann erreicht werden, dass die Rückseite des Behälters völlig im Schatten liegt.

Ein entsprechender Gruppenträger kann beispielsweise 20 Einzelstrahlungsquellen umfassen. Um in Umfangsrichtung an jeder Stelle den Behälter beleuchten zu können, wird eine Mehrzahl von Strahlungsquellengruppen bzw. Gruppenträgern verwendet. Bei einem Ausführungsbeispiel werden beispielsweise 18 solcher Gruppenträger mit entsprechender Anzahl von Einzelstrahlungsquellen verwendet.

Solche Einzelstrahlungsquellen einer Strahlungsquellengruppe sind nebeneinander aber auch übereinander angeordnet, so dass im Prinzip jede Strahlungsquellengruppe in Untergruppen zur Beleuchtung des Behälters aus unterschiedlichen Höhenwinkeln mittels einer jeden Untergruppe mit entsprechenden Einzelstrahlungsquellen unterteilbar ist.

Wie bereits ausgeführt, kann jeder der Gruppenträger justiert und variiert angeordnet werden, um entsprechend die Fokuspunkte der Einzelstrahlungsquellen abhängig von zu prüfenden Durchmesser des Behälters auf die ausgewählten Behälterbereiche einzustellen. Die entsprechende Einstellung oder Anordnung der Gruppenträger kann durch einen zentralen Einstellmechanismus erfolgen. Eine solche Einstellung ist beispielsweise bei einem Formatwechsel von Behältern von Vorteil.

Es besteht weiterhin die Möglichkeit, auch verschiedene Strahlungsquellengruppen oder jeweilige Untergruppen auch von unterschiedlichen Strahlungsquellengruppen zur gemeinsamen Beleuchtung eines Behälterbereichs miteinander zu koppeln. Eine entsprechende Kamera wird dann zur Aufnahme des reflektierten Lichts und insbesondere des entsprechenden Bildes ausgewählt.

D.h., es kann ein synchrones Beleuchten und Belichten von einer entsprechenden Strahlungsquellengruppe oder-gruppen und zugeordneter Kamera erfolgen. Die entsprechende Zuordnung von Kamera und Strahlungsquellengruppe ist so, siehe auch die obigen Ausführungen, dass eine tangentiale Beleuchtung des Behälterdurchmessers erfolgt und entsprechend reflektiertes Licht von der Kamera erfasst wird. Bei entsprechender Anzahl von Strahlungsquellengruppen und Kameras besteht beispielsweise die Möglichkeit, in Umfangsrichtung eine Beleuchtung des Behälters beispielsweise im Uhrzeigersinn mehrfach und anschließend entgegen dem Uhrzeigersinn ebenfalls mehrfach durchzuführen. Entsprechende Kameras erfassen das reflektierte Licht.

Durch dieses hintereinander erfolgende Bestrahlen und Aufnehmen wird im Wesentlichen eine Aufnahmesequenz erhalten, die sich entsprechend durch zeitlich sequenzielles Bestrahlen und synchrones Aufnehmen in Umfangsrichtung des Behälters ergibt.

Bei einem Ausführungsbeispiel ist eine entsprechende Strahlungsquellengruppe in sechs Untergruppen unterteilt, wobei die Strahlungsquellengruppe insgesamt 20 Einzelstrahlungsquellen aufweist. Diese entsprechenden Untergruppen sind aus unterschiedlichen Höhenwinkeln auf den Behälter gerichtet. Dadurch ergibt sich ein Raumwinkel, aus dem ein sich aus allen aktiven Einzellichtquellen ergebender Lichtkegel auf den Behälter strahlt. Dieser Raumwinkel ist auf Grund der Untergruppen in großen Teilen frei einstellbar.

Es besteht ebenfalls die Möglichkeit, dass die Vorrichtung eine Ansteuerelektronik zum sequenziellen und/oder getakteten Betreiben der Strahlungsquellengruppen und/oder zugeordneter Kameras aufweist. Dabei ist es ebenfalls möglich, dass Einzelstrahlungsquellen einer oder auch unterschiedlicher Strahlungsquellengruppen individuell angesteuert werden. Auf dieser Weise besteht die Möglichkeit, in einfacher Weise und mit vielen Variationen, ausgewählte Behälterbereiche zu beleuchten und eine entsprechende Kamera zur Aufnahme eines Bildes zuzuschalten.

Zur Initialisierung des Überprüfens ist es gegebenenfalls von Vorteil, wenn eine bestimmte Position des Behälters erfasst wird, wozu beispielsweise eine Positionskamera verwendet werden kann. Diese ermittelt die Position des Behälters zumindest zu Beginn einer entsprechenden Aufnahmesequenz in der Inspektionsstation. Die entsprechende Positionsbestimmung kann zur Kompensierung von Positionsabweichungen vor Beginn der Aufnahmesequenz dienen.

Auch die Kameras können in entsprechenden funktionalen Gruppen zusammengefasst sein.

Eine Gruppe wird beispielsweise durch die Positionskamera gebildet.

Eine andere Gruppe von Kameras kann beispielsweise auf eine Mündung des Behälters bei anzuhebenden Behältern gerichtet sein, während eine weitere Gruppe von Kameras auf einen Schulterbereich oder einen anderen sich unterhalb der Mündung erstreckenden Bereich des Behälters gerichtet ist.

Durch die individuelle Ansteuerung der Strahlungsquellen und Kameras können Folgen von mehreren Bildern mit unterschiedlichen Beleuchtungen von unterschiedlichen Kameras aufgenommen werden, während sich der Prüfling in der Prüfposition befindet, siehe die Positionskamera, wobei dies allerdings so zu verstehen ist, dass sich der Prüfling mit einer Geschwindigkeit von bis zu 1 m/s oder auch mehr durch den entsprechenden Prüfbereich bewegt. Allerdings ist die Zeit zwischen aufeinanderfolgenden, aufzunehmenden Bildern so gering, dass jegliche Bewegung des Prüflings während der Aufnahmedauer vernachlässigt werden kann.

Um dies zu erreichen, werden beispielsweise Belichtungszeiten für Einzelbilder von maximal 100 µs verwendet. Synchron zu diesen kurzen Belichtungszeiten wird durch individuell ausgewählte Einzellichtquellen oder Strahlungsquellengruppen entsprechend intensives Licht abgestrahlt.

Erfindungsgemäß besteht die Möglichkeit, beispielsweise eine Aufnahmesequenz von 20, 25, 30 oder mehr Bilder pro Behälter zu erhalten. Dabei erfolgt während der Erzeugung der gesamten Aufnahmesequenz eine Bewegung des Behälters von weniger als 2 oder 3 mm in Förderrichtung, so dass dies als quasi stationär betrachtet wird.

Die Gruppe von Kameras auf Höhe der Behältermündung ist beispielsweise in der Lage, drei Teilbilder in extrem kurzer Folge aufzunehmen. Da in der Regel auch das Abspeichern solcher Teilbilder und das entsprechende Auslesen aus der Sensoreinheit Zeit kostet, erfolgt dies erfindungsgemäß in spezifischer Weise. Werden beispielsweise zwei Teilbilder hintereinander aufgenommen, werden unterschiedlicher Zeilen für jedes Teilbild der entsprechenden Sensoreinheit belichtet, die beispielsweise ein CCD-Sensor ist. Erst nachdem beide Teilbilder aufgenommen sind, erfolgt eine Verarbeitung aller Teilbilder. D.h. die entsprechend hintereinander aufgenommenen Teilbilder werden in unterschiedlichen Bereichen der Sensoreinheit vor Auslesen und Auswerten abgespeichert.

Bei einem Ausführungsbeispiel kann dies dadurch erfolgen, dass sich das erste Teilbild beispielsweise durch belichtete Zeilen 1, 4, 7 usw. ergibt. Das darauffolgende Teilbild wird beispielsweise durch die Zeilen 2, 5, 8 usw. und ein weiteres Teilbild durch Zeilen 3, 6, 9 usw. bestimmt. Erst nach allen drei Einzelaufnahmen bzw. Teilbildern wird ein gemischtes Gesamtbild an ein auswertendes Computersystem geschickt, dort wieder in die Teilbilder zerlegt und als Einzelbilder weiter verarbeitet.

Dadurch besteht die Möglichkeit, auch mehrere Teilbilder nur wenigen µs hintereinander zu erhalten, ohne sonst übliche Bildaquisitionszeiten zwischen den Aufnahmen verstreichen zu lassen.

Dadurch wird die Zeit zur Aufnahme einer Aufnahmesequenz weiter verkürzt.

Weiterhin als vorteilhaft kann betrachtet werden, wenn die Kameras in Umfangsrichtung des Behälters so angeordnet sind, dass sie überlappende Aufnahmebereiche aufweisen. Es besteht beispielsweise die Möglichkeit, die gesamten 360° des Umfangs durch neun unterschiedliche Kameras zu erfassen, so dass der Winkel zwischen zwei Kameras jeweils 40° beträgt, wobei allerdings jede Kamera nahezu 180° des Behälters von einer Seite erfasst. Durch diese Anzahl und Anordnung der Kameras ergibt sich ein sehr großer Überlappungsbereich, so dass im Wesentlichen jeder Teil der Behälterwand von vier Kameras auch unter vier verschiedenen Winkeln betrachtet werden kann.

In diesem Zusammenhang kann es weiterhin von Vorteil sein, wenn jedes Teilbild einer entsprechenden Kamera durch andere Einzellichtquellen oder Strahlungsquellengruppen entsprechend erzeugt wird. Beispielsweise kann für ein Teilbild eine Strahlungsquellengruppe aktiviert werden, die sich beispielsweise in Blickrichtung der Kamera links vom Behälter befindet. Diese Strahlungsquellengruppe sendet ihr Licht quer zur Blickrichtung tangential in die Behälterwand. Dadurch wird zwar beispielsweise eine linke Hälfte des entsprechenden Behälterbereichs beleuchtet und ist zur Prüfung nicht verwendbar. Allerdings werden die rechts im Behälterbereich befindlichen Fehler in Form von Reflektionen sichtbar und dieser Bereich des Bildes kann zur Prüfung bzw. Erkennung der Fehler verwendet werden.

Analog kann dann von rechts eine Beleuchtung erfolgen, bei der die linke Hälfte des entsprechenden Behälterbereichs beispielsweise Risse in Form von Reflektionen aufweist, so dass beim zweiten Teilbild entsprechende Risse im linken Teil des Behälterbereichs erfasst werden. Beide Teilbilder können dann kombiniert werden, zusammen mit noch weiteren Kameraansichten anderer Kameras, so dass in einfacher Weise schnell Fehler in einem entsprechenden Behälterbereich in Umfangsrichtung vollständig erfasst werden.

Die Erfassung kann noch dadurch verbessert werden, dass frei wählbar Einzelstrahlungsquellen pro entsprechendem Teilbild aktiviert werden, um beispielsweise individuell einen entsprechenden Raumwinkel einzustellen, unter dem das Licht auf dem Behälter geschickt wird.

Auf diese Weise lassen sich Fehler beliebiger Ausrichtung sichtbar machen.

Eine weitere Gruppe von Kameras kann schräg oberhalb des entsprechenden Behälters angeordnet sein, wobei diese Kameras mit denselben Strahlungsquellen wie die anderen Kameras zusammen arbeiten.

Die letztgenannten Kameras dienen beispielsweise zur Erkennung von horizontal oder nahezu horizontal verlaufenden Rissen des Behälters. Das Funktionsprinzip ist analog zur Erfassung der bisher beschriebenen Risse.

Ebenfalls kann eine Erfassung von Rissen in einem Behälterbereich zwischen Behälterboden und Behälterseitenwand erfolgen.

In diesem Fall sind nur die entsprechenden Kameras und Strahlungsquellen im unteren Halbraum, d.h. unterhalb des Behälters angeordnet, wobei dieser durch die entsprechenden Hubelemente absenkbar ist.

Erfindungsgemäß sind somit Risse oder andere Fehler des Behälters in allen Behälterbereichen erfassbar, wobei entsprechend zugeordnete Inspektionsstationen aufeinanderfolgend entlang der Fördereinrichtung angeordnet sein können.

Im Folgenden wird ein vorteilhaftes Ausführungsbeispiel der Erfindung anhand der in der Zeichnung beigefügten Figuren näher erläutert.

Es zeigen:
- Fig. 1: eine perspektivische Seitenansicht einer erfindungsgemäßen Inspektionsvorrichtung;
- Fig. 2: eine Seitenansicht der Vorrichtung nach Fig. 1;
- Fig. 3: einen Schnitt entlang der Linie A-A aus Fig. 2;
- Fig. 4: einen Schnitt entlang der Linie B-B aus Fig. 2;
- Fig. 5: eine perspektivische Ansicht einer in der Inspektionsvorrichtung verwendeten Transporteinrichtung;
- Fig. 6: eine Draufsicht auf die Transporteinrichtung nach Fig. 5;
- Fig. 7: eine Seitenansicht der Transporteinrichtung nach Fig. 5;
- Fig. 8: eine teilweise Darstellung eines Anhebens/Absenkens von Behältern mittels der Transporteinrichtung;
- Fig. 9: eine Vorderansicht einer Belichtungs- und Auswertevorrichtung als Teil der Inspektionsvorrichtung nach Fig. 1;
- Fig. 10: eine Ansicht aus Richtung E-E nach Fig. 9;
- Fig. 11: einen Schnitt entlang einer Linie D-D aus Fig. 9;
- Fig. 12: eine perspektivische Ansicht einer Untereinheit zum Aufbau einer Belichtungs- und Auswertevorrichtung nach Fig. 10; und
- Fig. 13: eine Seitenansicht der Untereinheit nach Fig. 12.

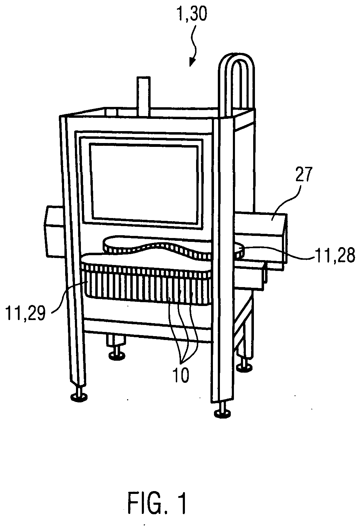

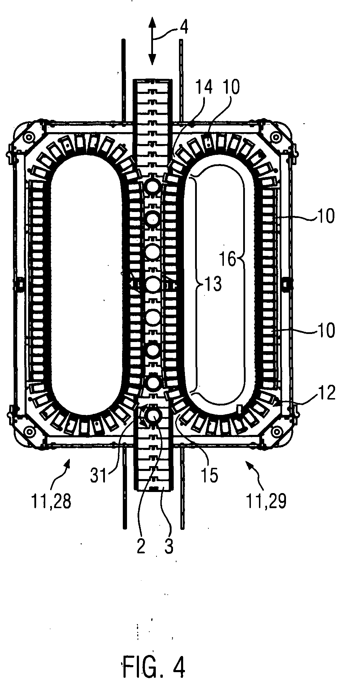

Nach Fig. 1 ist die erfindungsgemäße Inspektionsvorrichtung 1 in einer perspektivischen Darstellung sichtbar. Die Inspektionsvorrichtung 1 umfasst im oberen Bereich eine Belichtungs- und Auswertevorrichtung 30. Unterhalb dieser Belichtungs- und Auswertevorrichtung 30 ist eine Transporteinrichtung 11 angeordnet, siehe linken Teil 28 und rechten Teil 29 der entsprechenden Transporteinrichtung. Diese wird im Folgenden näher beschrieben, siehe insbesondere die Fig. 4-8.

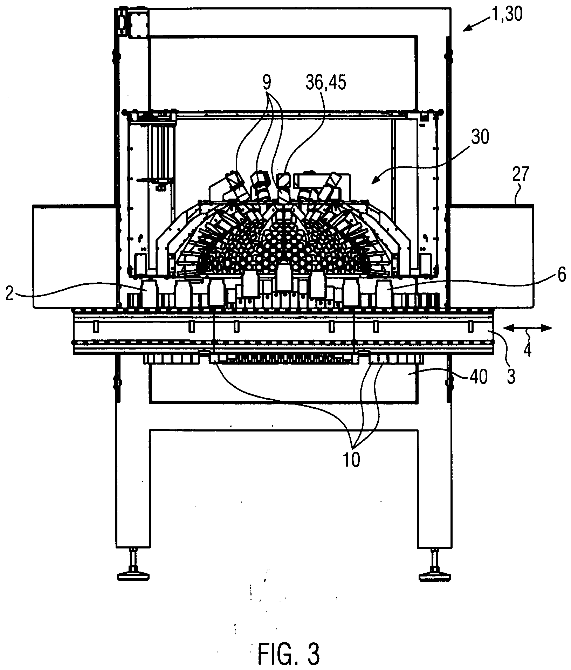

Die Transporteinrichtung 11 aus linkem und rechtem Teil 28, 29 dient zum Anheben/Absenken von Behältern 2, siehe auch Fig. 3, die mittels einer Fördereinrichtung 3 in Förderrichtung 4 durch die Inspektionsvorrichtung 1 kontinuierlich transportiert werden. Zum Schutz des Einlaufs und Auslaufs solcher Behälter weist die Inspektionsvorrichtung 1 dachähnliche Verkleidungen 27 an ihren beiden seitlichen Enden auf.

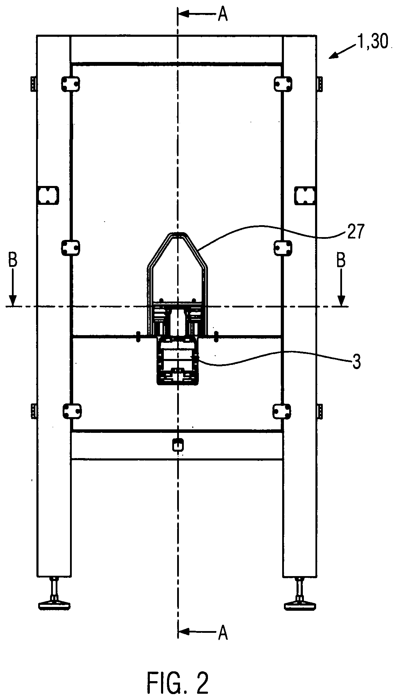

In Fig. 2 ist eine Seitenansicht der Inspektionsvorrichtung 1 nach Fig. 1 dargestellt. Insbesondere erkennbar ist die Fördereinrichtung 3, auf der die entsprechenden Behälter in die Inspektionsvorrichtung 1 ein- und nach Inspektion wieder herangeführt werden. Oberhalb der Fördereinrichtung 3 ist die entsprechende Verkleidung 27 angeordnet.

Fig. 3 zeigt einen Schnitt durch die Inspektionsvorrichtung 1 nach Fig. 2 entlang der Linie A-A. Die Fördereinrichtung 3 ist als Horizontalförderer ausgebildet, wobei entsprechende weitere Fördereinrichtungen, die zum Herantransport und Weitertransport der Behälter 2 dienen, zur Vereinfachung nicht dargestellt sind.

Seitlich zur Fördereinrichtung 3 sind linker und rechter Teil 28, 29 der Transporteinrichtung 11 angeordnet, siehe auch Fig. 4. In Fig. 3 wird auf den linken Teil 28 der Transporteinrichtung 11 geblickt, der eine Vielzahl von Hubelementen 10 aufweist. Diese sind relativ eng benachbart zueinander angeordnet und sind einzeln senkrecht zur Förderrichtung 4 verstellbar gelagert. In der Mitte der Fig. 3 ist ein Behälter maximal angehoben und mittig zur Belichtungs- und Auswertevorrichtung 30 angeordnet. In dieser Position weist die Belichtungs- und Auswertevorrichtung 30 eine Kameragruppe 36 auf, die durch eine Positionskamera 45 gebildet ist. Diese stellt die entsprechende Position des Behälters 2 fest und initiiert eine Aufnahmesequenz zur Überprüfung des Behälters auf Risse, Brüche, Blasen oder dergleichen.

Vor und hinter dem maximal angehobenen Behälter 2 sind bereits weitere Behälter teilweise angehoben oder bereits teilweise wieder abgesenkt dargestellt. Am Anfang und am Ende der entsprechenden Belichtungs- und Auswertevorrichtung 3 werden die Behälter durch die Fördereinrichtung 3 transportiert, während sie durch die Transporteinrichtung 11 während des Anhebens/Absenkens synchron zur Fördereinrichtung 3 in Förderrichtung 4 zusätzlich zum Anheben oder Absenken transportiert werden. Das heißt, die entsprechenden Hubelemente 10 bewegen sich synchron zur Fördereinrichtung 3 in Förderrichtung 4.

Weitere Aufnahmeeinrichtungen 9 in Form von Kameras oder Kameragruppen sind in Fig. 3 ebenfalls sichtbar und werden später beschrieben.

Fig. 4 zeigt eine Draufsicht auf die Transporteinrichtung 11 aus linkem und rechtem Teil 28, 29. Die entsprechenden Teile weisen eine geschlossene Bahn 12 auf, entlang der die verschiedenen Hubelemente 10 bewegt werden. Die Bahn 12 weist einen Hubbahnabschnitt 13 auf, der seitlich der Fördereinrichtung 3 zugeordnet ist und in welchem das entsprechende Anheben/Absenken der Behälter 2 erfolgt. Weiterhin weist die Bahn einen Rückführbahnabschnitt 16 auf, der Enden 14 und 15 des Hubbahnabschnitts 13 miteinander verbindet. Auf diese Weise ist eine kontinuierliche Bewegung der Hubelemente möglich.

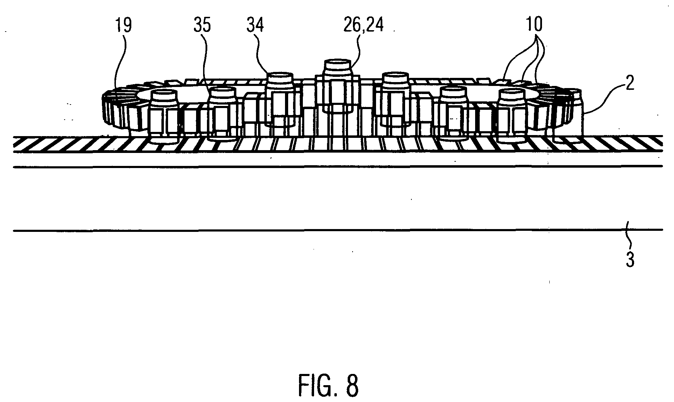

Durch die entsprechende Belichtungs- und Auswertevorrichtung 30 wird insbesondere der entsprechende Behälter 2 in Umfangsrichtung 31 in verschiedenen Höhenbereichen oder insbesondere in einem ausgewählten Behälterbereich 6 abgetastet, siehe hierzu auch Fig. 8.

Statt einzelner und voneinander separierter Hubelemente 10 können auch umlaufende Gurtabschnitte eingesetzt werden, die entlang eines bestimmten Abschnitts der Fördereinrichtung 3 zum Anheben/Absenken der Behälter 2 angeordnet sind. Diese Gurtabschnitte laufen kontinuierlich um und dienen zum teilweisen Anheben bzw. Absenken des entsprechenden Behälters. Bei solchen umlaufenden Gurtabschnitten ist keine entsprechende Bahn mit Hubbahnabschnitt und Rückführbahnabschnitt notwendig. Stattdessen erstrecken sich mehrere solcher Gurtabschnitte entlang der Fördereinrichtung 3 auf deren beiden Seiten.

Erfindungsgemäß wird der Abstand der Behälter, der durch den durch die Fördereinrichtung 3 geförderten Behälterstrom vorgegeben ist, nicht verändert. Es erfolgt nur ein synchron zum Transport der Behälter in Förderrichtung 4 erfolgendes Anheben bzw. Absenken.

An dieser Stelle sei außerdem angemerkt, dass das Anheben/Absenken nicht nur senkrecht zur Förderrichtung 4, d.h. im Wesentlichen vertikal, erfolgen kann. Es ist ebenfalls denkbar, dass die Behälter 2 durch die entsprechende Transporteinrichtung 11 unter einem Winkel schräg nach oben oder unten zur Fördereinrichtung 3 bewegt werden.

Weiterhin sei angemerkt, dass das dargestellte Ausführungsbeispiel im Wesentlichen ein Anheben der Behälter zur Überprüfung zeigt. Es ist allerdings ebenso möglich, dass der Behälter durch analoge Hubelemente oder Gurtabschnitte abgesenkt wird zur Überprüfung, wobei in diesem Zusammenhang die entsprechende Fördereinrichtung 3 nur im Eingangsbereich und Ausgangsbereich der Inspektionsvorrichtung 1 ausgebildet ist, um einerseits die Behälter von dieser abzuheben und nach Überprüfung wieder aufzustellen. Ansonsten ist keine Fördereinrichtung 3 im Bereich zwischen linkem und rechtem Teil der Transporteinrichtung 11 vorgesehen, so dass ein freies Absenken der Behälter unter die Ebene der Fördereinrichtung möglich ist.

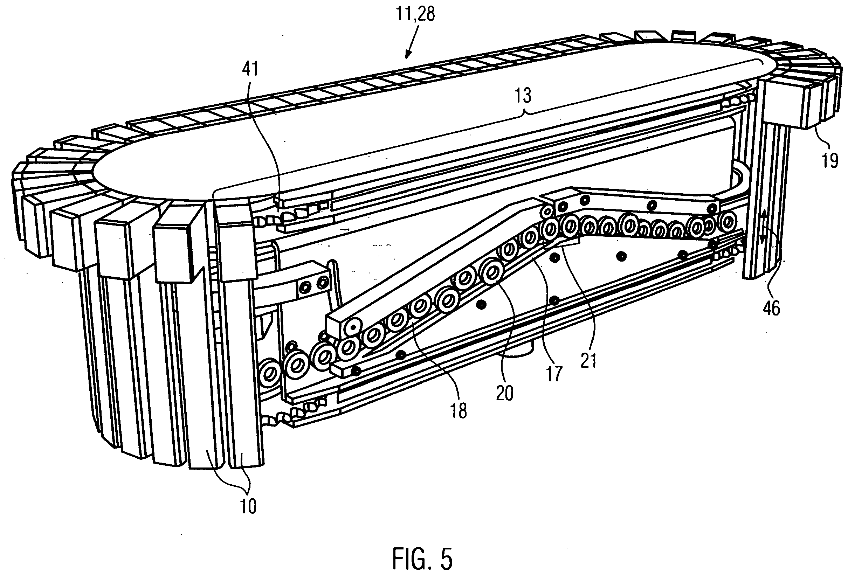

Fig. 5 zeigt eine perspektivische Seitenansicht des linken Teils 28 der Transporteinrichtung 11.

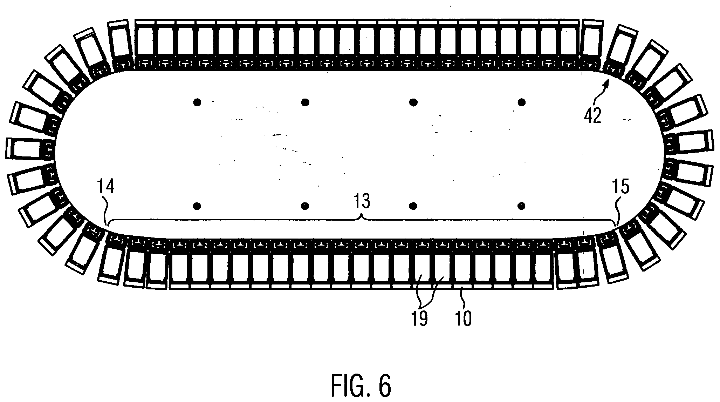

Insbesondere ist erkennbar, dass eine Vielzahl von Hubelementen 10 entlang der geschlossenen Bahn 12 umlaufen, siehe nochmals Fig. 4. Ein Teil der Hubelemente 10 ist weggelassen worden, um deren Transport bzw. deren Bewegung mittels einer Greiferkette 41 darzustellen. Das Anheben und Absenken der Hubelemente 10 erfolgt über einen Nockenfolger 20, der an jedem Hubelement 10 angeordnet ist. Die Hubelemente sind in vertikaler Richtung 46 verstellbar gelagert, siehe auch die entsprechenden Schienen 42 nach Fig. 6. Die entsprechenden Nockenfolger 20 sind radähnlich ausgeführt und rollen entlang entsprechender Hubkonturen 17 bzw. 18. Von diesen sind zwei zumindest im Bereich des Hubbahnabschnitts 13 angeordnet. Die erste Hubkontur 17 hat eine Form analog zur zweiten Hubkontur 18, wobei diese phasenversetzt zueinander angeordnet sind. Die Hubkonturen 17, 18 dienen dazu, zwei Hubelemente 10 im Wesentlichen synchron zueinander anzuheben, wenn ein Behälter 2 von beiden Hubelementen 10 beim Einlaufen in die Inspektionsvorrichtung 1 ergriffen wird. Durch den entsprechenden Phasenversatz der beiden Hubkonturen 17, 18 ist sichergestellt, dass diese beiden Hubelemente 10 den entsprechenden Behälter gleichzeitig entsprechend anheben oder absenken. Dadurch kommt es zu keinen undefinierten Verschiebungen des Behälters durch ungleichmäßiges Anheben oder Absenken der zugeordneten Hubelemente.

Die entsprechenden Nockenfolger 20 sind seitlich verstellbar gelagert, um der ersten oder zweiten Hubkontur 17, 18 zu folgen. Die seitliche Verstellung wird durch eine Sensoreinrichtung bewirkt, die die entsprechende Zuordnung des Behälters zu zwei aufeinanderfolgenden Hubelementen beim Einlaufen des Behälters in die Inspektionsvorrichtung feststellt.

In Fig. 6 ist eine Draufsicht auf den linken Teil 28 der Transporteinrichtung 11 dargestellt.

Es ist nochmals insbesondere erkennbar, in welcher Weise die Hubelemente 10 entlang des Hubbahnabschnitts 13 und anschließend des Zurückführbahnabschnitts 16 geführt werden.

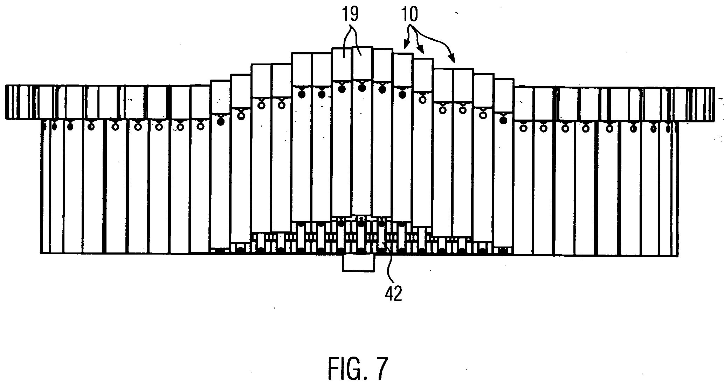

In Fig. 7 ist eine Seitenansicht der entsprechenden Transporteinrichtung 11 dargestellt. Insbesondere ist ersichtlich, dass verschiedene Hubelemente 10 in gleicher Weise angehoben bzw. abgesenkt werden, da diese den verschiedenen Hubkonturen 17, 18 folgen, siehe insbesondere auf der linken Seite von den in Fig. 7 am höchsten angehobenen Hubelemente 10. Von diesen wird dann ein Behälter 2 gehalten.

Fig. 8 entspricht einer Ansicht nach Fig. 7, wobei zusätzlich die Fördereinrichtung 3 und entsprechende Behälter 2 dargestellt sind. Die Behälter 2 werden von der Fördereinrichtung 3 in Fig. 8 nach oben abgehoben, um den ausgewählten Behälterbereich 6, wie Mündung, oberer Behälterabschnitt oder dergleichen, zu überprüfen. Die entsprechende Oberfläche 24 des Behälters 2 in diesem Bereich wird von den voranlaufenden oder nachfolgenden Behältern nicht abgedeckt, und ist zur Prüfung durch die Belichtungs- und Auswertevorrichtung 30, siehe die folgenden Ausführungen, frei zugänglich.

Es sei nochmals darauf hingewiesen, dass sich die Hubelemente 10 entlang der Fördereinrichtung 30 synchron zu dieser bewegen, so dass keine Verzögerung des Behälterstroms oder eine Abstandsänderung der Behälter im Behälterstrom auftritt.

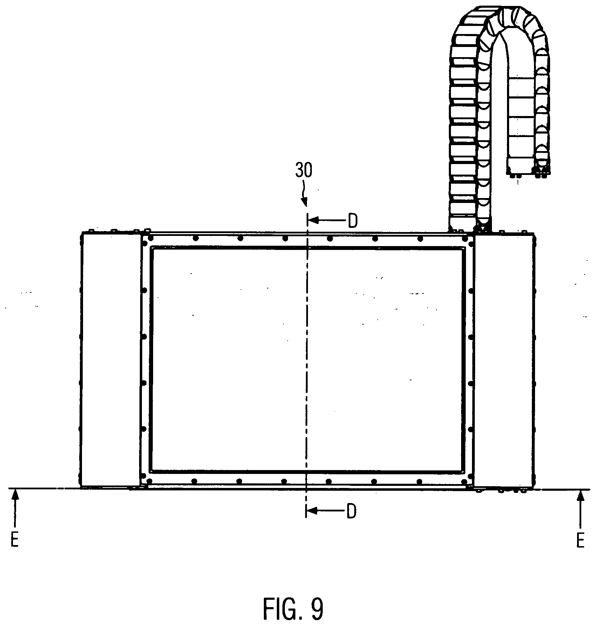

Fig. 9 zeigt eine Seitenansicht der erfindungsgemäßen Belichtungs- und Auswertevorrichtung 30, siehe auch Fig. 1 bzw. 2, die oberhalb der Fördereinrichtung 3 und der entsprechenden Transporteinrichtung 11 angeordnet ist.

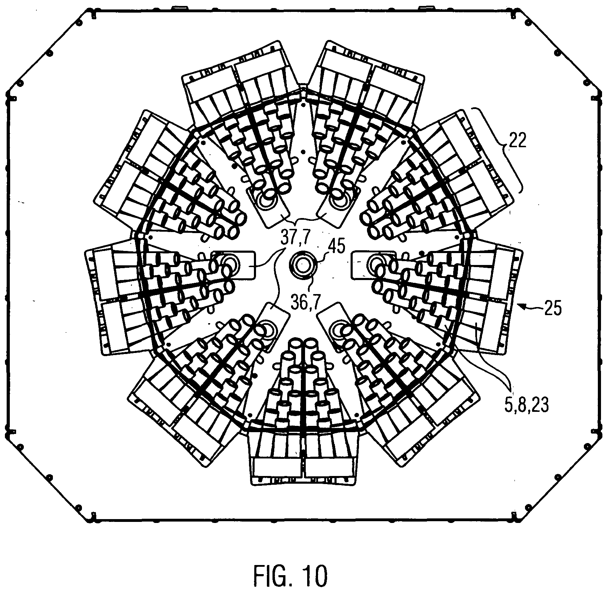

Fig. 10 zeigt eine Ansicht aus Richtung E-E aus Fig. 9. Diese Ansicht ist in einen oberen Halbraum 39 gerichtet, siehe auch Fig. 3, wobei bei einem anderen Ausführungsbeispiel der Erfindung die Belichtungs- und Auswertevorrichtung 30 entsprechend in einem unteren Halbraum 40 angeordnet sein kann.

Es ist ebenfalls denkbar, dass zwei unterschiedliche Inspektionsvorrichtungen mit Belichtungs- und Auswertevorrichtung im oberen Halbraum 39 und anschließend im unteren Halbraum 40 hintereinander angeordnet sind.

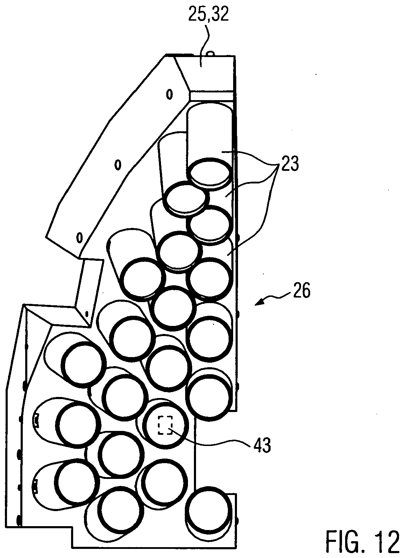

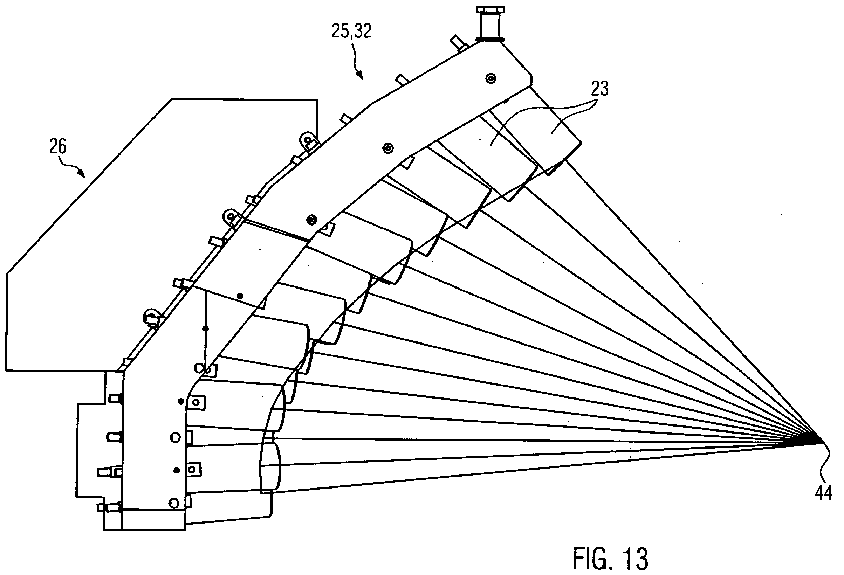

In Fig. 10 ist insbesondere erkennbar, dass die Belichtungs- und Auswertevorrichtung 30 eine Vielzahl von Strahlungsquellen 8 in Form von Einzelstrahlungsquellen 23 aufweist. Solche sind beispielsweise LEDs, die in einem rohrförmigen Gehäuse angeordnet sind. Eine Mehrzahl solcher Einzelstrahlungsquellen 23 sind nebeneinander und übereinander angeordnet und bilden eines Strahlungsquellengruppe 22. Diese setzt sich bei dem dargestellten Ausführungsbeispiel aus zwei Untereinheiten 32 zusammen, siehe auch Fig. 12 und 13. Jede dieser Untereinheiten 32 bzw. auch die Strahlungsquellengruppe 22 selbst, sind auf einem Gruppenträger 25 angeordnet, der separat handhabbar und einbaubar ist.

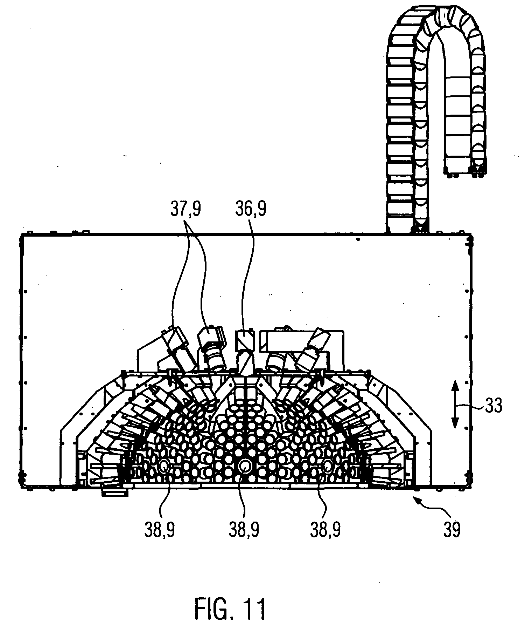

Der entsprechende Gruppenträger 25 kann auch zur Halterung einer oder mehrerer Kameras bzw. Aufnahmeeinrichtungen 9 dienen, um verschiedene Kameragruppen 36, 37 und 38 zu bilden, siehe auch Fig. 11. Eine Kamerabaugruppe 36 umfasst nur die Positionskamera 45, während eine andere Kamerabaugruppe 37 bei dem dargestellten Ausführungsbeispiel 6 Kameras umfasst, die einem oberen Ende des entsprechenden Behälters zugeordnet sind, siehe auch Fig. 11. Jede dieser Kameras weist eine entsprechende optoelektronische Sensoreinheit 7 auf. Diese kann beispielsweise als CCD-Matrixeinheit ausgebildet sein.

In Fig. 10 sind zehn solcher Strahlungsquellengruppen 22 dargestellt, die entlang einer Umfangsrichtung 31, siehe auch Fig. 4 des entsprechenden Behälters angeordnet sind, so dass der Behälter von allen Seiten bestrahlbar und überprüfbar ist, siehe auch Fig. 3.

Fig. 11 zeigt einen Schnitt entlang der Linie D-D aus Fig. 9 und zeigt im Wesentlichen eine linke Hälfte der Belichtungs- und Auswertevorrichtung 30, siehe auch Fig. 10. Insbesondere ist erkennbar, dass die entsprechenden Kameras bzw. Aufnahmeeinrichtungen 9 der Kameragruppe 37 bzw. 36 zumindest teilweise am entsprechenden Gruppenträger 25 befestigt sind. Weiterhin sind Aufnahmeeinrichtungen 9 einer weiteren Kameragruppe 38 sichtbar, die den entsprechenden Behälter 2 im Wesentlichen seitlich abtastet, siehe auch Fig. 3.

Die verschiedenen Einzelstrahlungsquellen 23 einer jeden Strahlungsquellengruppe 22 sind in Höhenrichtung 33 übereinander angeordnet und sind radial und/oder vertikal relativ zum Behälter 2 verstellbar, um an unterschiedliche Behälterdurchmesser in einfacher Weise angepasst zu werden.

Die Einzelstrahlungsquellen 23 einer jeden Strahlungsquellengruppe 22 sind gleichartig fokussiert, siehe auch Fig. 12 und 13, um jeweils einen bestimmten Durchmesser des Behälters in einem bestimmten Höhenbereich zu beleuchten. Die verschiedenen Höhenbereiche sind beispielsweise in Fig. 8 dargestellt.

Zur Vereinfachung sind keine einzelnen LEDs dargestellt, die in jedem der röhrenförmigen Gehäuse angeordnet sind.

In Fig. 12 ist eine Untereinheit 32 einer entsprechenden Strahlungsquellengruppe 22 bzw. des zugehörigen Gruppenträgers 25 dargestellt. Insbesondere ist zusätzlich noch eine rechteckförmige Blende 43 in einer der Einzelstrahlungsquellen 23 dargestellt, die dazu dient, dass das Licht einer jeden LED auf eine scharf umrissene rechteckige Fläche fokussiert wird.

In Fig. 13 ist eine Seitenansicht der Untereinheit 32 der Fig. 12 dargestellt. Insbesondere die Fokussierung auf einen Fokuspunkt 44 ist dort illustriert, wobei dieser Fokuspunkt 44 auf einem Durchmesser des entsprechenden Behälters in einem spezifischen Höhenbereich 34 oder 35 liegt.

Im Folgenden wird die Erfindung und deren Verwendung kurz beschrieben.

Während des Transports der Behälter 2 mittels der entsprechenden Transporteinrichtung 11 und durch das entsprechende Anheben oder Absenken eines jeden Behälters, siehe insbesondere Fig. 3, erfolgt simultan eine optische Überprüfung durch die Belichtungs- und Auswertevorrichtung 30. Diese erfolgt insbesondere in den freigelegten Höhenbereichen 34 oder 35, welche durch Anheben eines entsprechenden Behälters gegenüber dem benachbarten Behältern freigelegt werden.

Der Behälter wird lageunabhängig und rundum überprüft. Die Überprüfung erfolgt immer für einen bestimmten Teilbereich in Umfangsrichtung 31 des Behälters 2 durch eine entsprechende Kamera oder Kameragruppe und zugeordnete Strahlungsquellen. Es wird ein Teil des Behälters überprüft, der einer Kamera direkt zugewandt ist. Die Beleuchtung erfolgt dabei mit einem stark gerichteten und intensiven Licht, das nur zur entsprechenden Seite des Behälters ausgerichtet ist, die zur Überprüfung einer entsprechenden Kamera zugeordnet ist. Die anderen Teile der Oberfläche des Behälters sollen möglichst vollständig im Schatten liegen.

Das Licht einer jeden Einzelstrahlungsquelle 23 wird durch eine entsprechende Blende auf eine scharf umrissene, rechteckige Fläche fokussiert. Diese Fokussierung erfolgt für alle Einzelstrahlungsquellen 23 einer Strahlungsquellengruppe 22 oder Untergruppe in gleicher Weise.

Die entsprechenden Gruppenträger sind beweglich und können von einem zentralen Einstellmechanismus bewegt werden, um abhängig vom zu prüfenden Durchmesser des entsprechenden Behälters die entsprechenden Fokuspunkte auf der Oberfläche des Behälters festzulegen. Werden beispielsweise Behälter mit anderem Durchmesser verwendet, erfolgt eine entsprechende Einstellung der Fokuspunkte auf den neuen Behälterdurchmesser.

Jede Strahlungsquellengruppe 22 ist in entsprechende Untergruppen 26 unterteilt, siehe auch Fig. 12, die aus unterschiedlichen Höhenwinkeln auf den Behälter gerichtet sind. Auf diese Weise ist ein sich von allen aktiven Lichtquellen ergebender Lichtkegel, der auf den Behälter strahlt, in großen Teilen frei hinsichtlich seines entsprechenden Raumwinkels einstellbar.

Durch eine entsprechende Ansteuerung besteht die Möglichkeit, Einzelstrahlungsquellen 23, Untergruppen 26, oder Strahlungsquellengruppen 22 in nahezu beliebiger Weise miteinander zur Beleuchtung des Behälters für bestimmte Überprüfungen zu koppeln.

Durch die entsprechende Positionskamera wird festgestellt, dass der Behälter in einer Position innerhalb der Belichtungs- und Auswertevorrichtung 30 angeordnet ist, an der eine Aufnahmesequenz zur Überprüfung des Behälters gestartet werden kann. Eine solche Aufnahmesequenz wird von unterschiedlichen Kameras aufgenommen, während sich der Prüfling quasi stationär in dieser entsprechenden Prüfposition befindet. Dazu ist anzumerken, dass in der Regel ein solcher Behälter mit Geschwindigkeiten von bis zu 1 m/s oder auch mehr durch die entsprechende Fördereinrichtung 3 bewegt wird, während allerdings eine entsprechende Aufnahmesequenz aus einer Vielzahl von Einzelbildern in einer solch kurzen Zeit fertig gestellt wird, dass der Behälter sich während dieser Aufnahmedauer um weniger als 3 mm bewegt. Für jedes Einzelbild ergeben sich Belichtungszeiten von maximal 100 µs und die entsprechenden Strahlungsquellen werden synchron zu diesen Belichtungszeiten einer jeden Kamera aktiviert.

Eine solche Aufnahmesequenz kann beispielsweise 25 Einzelbilder pro Behälter aufweisen. Es sind allerdings auch mehr Bilder möglich.

Auf Höhe der Behältermündung oder eines oberen Endes des Behälters ist die Kameragruppe 37 angeordnet. Diese umfasst beispielsweise neun Kameras, von denen jede Teilbilder in sehr kurzer Zeit aufnimmt. Um diese Teilbilder in kurzer Zeit aufnehmen zu können, wird die entsprechende Sensoreinheit 7 einer jeden Kamera in bestimmter Weise betrieben. Ist eine solche Sensoreinheit beispielsweise eine CCD-Matrix, so werden von dieser Matrix für das erste Teilbild beispielsweise nur die Zeilen 1, 4, 7, usw., für das zweite Teilbild die Zeilen 2, 5, 8, usw., und für das dritte Teilbild die Zeilen 3, 6, 9, usw., belichtet. Auf diese Weise erhält man ein Bild aus drei Einzelaufnahmen, das durch die Auswertevorrichtung in Einzelbilder auseinandergenommen und entsprechend verarbeitet wird.

Die Sensoreinheit hat ansonsten eine gewisse Bildakquisitionszeit, die nach jeder Belichtung der Sensoreinheit zum Auslesen entsprechender Zeilen benötigt wird. Dies ist erfindungsgemäß nicht notwendig.

Es ist selbstverständlich auch möglich, durch entsprechenden Einsatz der Sensoreinheit zwei solcher Teilbilder oder auch mehr solcher Teilbilder aufzunehmen.

Um entlang des Umfangs des Behälters entsprechend alle Bereiche des Behälters zu überprüfen, sind die entsprechenden Kameras entlang der Umfangsrichtung 31 verteilt angeordnet. Allerdings sind die Kameras so angeordnet, dass sich ein großer Überlapp beim Aufnahmebereich ergibt. Bei dem dargestellten Ausführungsbeispiel kann beispielsweise jeder Teil der Behälterwand von vier Kameras unter vier verschiedenen Winkeln gesehen werden.

Eine auswählbare Anzahl von Einzelstrahlungsquellen 23 wird zur Beleuchtung eines Teils des Behälters für beispielsweise eine entsprechende Kamera oder Kameragruppe aktiviert. In der Regel wird einmal eine Anzahl von Einzelstrahlungsquellen links zur Blickrichtung der Kamera und einmal rechts zur Blickrichtung der Kamera aktiviert, um entsprechend Licht quer zur Blickrichtung tangential auf den Behälter einzustrahlen.

Bei Beleuchtung von links liegt der rechte Teil ab der Mitte des entsprechenden Bildbereichs der zugehörigen Kamera im Dunkeln, so dass dort Risse in Form von Reflektionen gut sichtbar sind. Dieser Bereich des Bildes wird zur Prüfung verwendet. Erfolgt die Beleuchtung von rechts, erfolgt analog eine Auswertung des linken Bildbereichs der jeweiligen Kamera, so dass sich dadurch beispielsweise zwei Teilbilder durch die entsprechenden Belichtungen ergeben.

Dies kann für alle Kameras einer entsprechenden Kameragruppe in gleicher Weise durchgeführt werden. Durch die entsprechende Überlappungen der Aufnahmebereiche ergeben sich eine Vielzahl von Einzelbildern entlang der Umfangsrichtung des Behälters, um Risse beliebiger Ausrichtung sichtbar zu machen.

Es sei nochmals darauf hingewiesen, dass für jede Kamera einer entsprechenden Kameragruppe unterschiedliche Einzelstrahlungsquellen 23, Strahlungsquellengruppen 22 oder auch Kombinationen von beiden aktivierbar sind.

Mittels einer anderen Kamerabaugruppe können beispielsweise horizontal oder nahezu horizontal verlaufende Risse des Behälters erfasst werden. Das Funktionsprinzip aller Kameragruppen ist wie vorstehend beschrieben.

Erfindungsgemäß ist so in einfacher und schneller Weise eine genaue Überprüfung eines Behälters möglich. Wie bereits ausgeführt, betrifft dies verschiedene ausgewählte Behälterbereiche 6, wie Mündung, obere Schulter, Bodenbereich, Übergang vom Boden zur Seitenwand und dergleichen. Es erfolgt eine entsprechende zeitlich sequenzielle Belichtung durch individuell aktivierbare Einzelstrahlungsquellen und eine entsprechende Aufnahmesequenz durch zugeordnete Kameras. Das heißt, für jedes Einzelbild ist eine individuelle Beleuchtung möglich.

Außerdem ergibt sich eine Überlappung der verschiedenen Einzelbilder, um eine Vielzahl von Ansichtsrichtungen abzudecken und gleichzeitig ist eine Einstellbarkeit des Raumwinkels des einfallenden Lichts möglich, um verschiedene Höhenbereiche 34, 35 und Behälter mit unterschiedlichen Durchmessern beleuchten zu können.

Statt einer punktweisen Fokussierung die Einzelstrahlungsquellen insbesondere pro Gruppe oder Untergruppe kann auch eine Fokussierung auf eine Linie oder einen anderen eng begrenzten Bereich erfolgen.

Außerdem können statt der beschriebenen Kameras mit in der Sensoreinheit abgespeicherten Teilbildern auch Hochgeschwindigkeitskameras verwendet werden.

## Patentansprüche

1. Inspektionsverfahren zur Prüfung von transparenten oder transluzenten Behältern (2), insbesondere Glasbehältern, auf Fehler, wie Sprünge, Risse, Blasen oder dergleichen, wobei diese Behälter von einer Fördereinrichtung (3) entlang einer Förderrichtung (4) kontinuierlich gefördert werden und während der Förderung jeder Behälter eine Inspektionsstation (1) durchläuft, in der eine berührungsfreie Inspektion zumindest eines ausgewählten Behälterbereichs (6) eines jeden Behälters stattfindet, wobei der ausgewählte Behälterbereich mit elektromagnetischer Strahlung von zumindest zwei Strahlungsquellen (8) beleuchtet wird, mittels wenigstens einer Sensoreinheit (7) vom ausgewählten Behälterbereich (8) reflektierte Strahlung aufgenommen und diese in Inspektionssignale zur Bewertung eventueller Fehler des Behälters umgesetzt wird,
mit den folgenden Schritten:
i) zusätzliches und zeitweiliges Anheben bzw. Absenken wenigstens eines Behälters (2) im Wesentlichen senkrecht zur Förderrichtung (4) zum Zugänglichmachen des ausgewählten Behälterbereichs relativ zu benachbarten Behältern zur Beleuchtung mit der elektromagnetischen Strahlung;
ii) zeitlich sequenzielles Bestrahlen des ausgewählten Behälterbereichs (6) durch die zumindest zwei insbesondere auf gegenüberliegenden Seiten des Behälters angeordneten Strahlungsquellen (8) während des Anhebens bzw. Absenkens des wenigstens einen Behälters;
iii) Aufnehmen der von dem wenigstens einen angehobenen bzw. abgesenkten Behälters reflektierten Strahlung durch jeweils zumindest eine jeder Strahlungsquelle zugeordnete Aufnahmeeinrichtung (9) mit Sensoreinheit, und
iv) Weiterfördern des Behälters (2) in Förderrichtung (4) mittels der Fördereinrichtung (3).

2. Inspektionsverfahren nach Anspruch 1, **gekennzeichnet durch** Anheben oder Absenken des Behälters (2) im Schritt i) mittels insbesondere an gegenüberliegende Seiten des Behälters angreifende Hubelemente (10) und/oder synchrones Bewegen der Hubelemente (10) mit der Fördereinrichtung (3) in Förderrichtung (4).

3. Inspektionsverfahren nach einem der vorangehenden Ansprüche, **gekennzeichnet durch** Bewegen einer Vielzahl von Hubelementen (10) entlang einer geschlossenen Bahn (12) beidseitig zur Fördereinrichtung (3) mit einem entlang der Fördereinrichtung verlaufenden Hubbahnabschnitt (13) und einem beide Enden (14, 15) des Hubbahnabschnitts (13) verbindenden Rückführbahnabschnitt (16), und insbesondere Einklemmen des Behälters (21) zwischen den angreifenden Hubelementen (10) im Wesentlichen während der Bewegung entlang des Hubbahnabschnitts (13).

4. Inspektionsverfahren nach einem der vorangehenden Ansprüche, **gekennzeichnet durch** Zwangsführen eines jeden Hubelements (10) entlang zumindest des Hubbahnabschnitts (13) zum Anheben bzw. Absenken des Behälters, insbesondere Zwangsführen zumindest zwei hintereinander angeordneter Hubelemente entlang zumindest des Hubbahnabschnitts mit einem Phasenversatz zum synchronen Anheben bzw. Absenken des Behälters (2) durch beide Hubelemente (10), und/oder kontinuierliches Anheben bzw. Absenken eines jeden Hubelements (10) zumindest im Hubbahnabschnitt (13).

5. Inspektionsverfahren nach einem der vorangehenden Ansprüche, **gekennzeichnet durch** Führen des Hubelements (10) entlang wenigstens einer ersten Hubkontur (17) zum Anheben bzw. Absenken, und insbesondere selektives Führen des Hubelements (10) entlang der ersten oder einer zu der ersten Hubkontur phasenversetzten zweiten Hubkontur (18).

6. Inspektionsverfahren nach einem der vorangehenden Ansprüche, **gekennzeichnet durch** Ansteuern hintereinander angeordneter Hubelemente (10) zur Führung entlang der ersten oder zweiten Hubkontur (17, 18) entsprechend zur erfassten Position eines jeden Behälters insbesondere bei Eintritt in den Hubbahnabschnitt (13).

7. Inspektionsverfahren nach einem der vorangehenden Ansprüche, **gekennzeichnet durch** Bestrahlen im Schritt ii) mittels einer Strahlungsquelle (8) aus einer Mehrzahl von eine Strahlungsgruppe (22) bildenden Einzelstrahlungsquellen (23) mit insbesondere gleicher Fokussierung und insbesondere Anordnen der Strahlungsquellen bzw. Strahlungsquellengruppen in einem dem Anheben bzw. Absenken des Behälters zugeordneten Halbraum (39, 40).

8. Inspektionsverfahren nach einem der vorangehenden Ansprüche, **gekennzeichnet durch** Beleuchten eines der jeweiligen Strahlungsquellengruppe (22) zuweisenden Oberfläche des ausgewählten Behälterbereich (6) und Erfassen der reflektierten Strahlung durch eine der jeweiligen Strahlungsquellengruppe (22) zugeordnete Kamera (36, 37, 38) mit optoelektronischer Sensoreinheit.

9. Inspektionsverfahren nach einem der vorangehenden Ansprüche, **gekennzeichnet durch** Bewegen eines jeden Gruppenträgers (25) mit einer Strahlungsquellengruppe (22) zur Fokussierung aller Einzelstrahlungsquellen des Trägers auf eine Oberfläche des Behälters (2) entsprechend zu dessem Durchmesser, und insbesondere sequenzielles Beleuchten des Behälters (2) entlang dessen Umfangsrichtung (31) durch eine Mehrzahl von Strahlungsquellengruppen (22).

10. Inspektionsverfahren nach einem der vorangehenden Ansprüche, **gekennzeichnet durch** Unterteilen einer Strahlungsquellengruppe (22) in Untergruppen und Beleuchten des Behälters aus unterschiedlichen Höhenwinkeln mittels einer jeden Untergruppe, wobei insbesondere verschiedene Strahlungsquellengruppen (22) oder jeweilige Untergruppen zur gemeinsamen Beleuchtung eines Behälterbereichs (6) gekoppelt sind.

11. Inspektionsverfahren nach einem der vorangehenden Ansprüche, **gekennzeichnet durch** synchrones Beleuchten und Belichten durch jeweils Strahlungsquellengruppe (22) oder - gruppen und zugeordnete Kamera bzw. Kameras (36, 37, 38) und/oder ein zeitlich sequenzielles Bestrahlen und synchrones Aufnehmen eines Bildes in Umfangsrichtung (31) des Behälters zur Bildung einer Aufnahmesequenz.

12. Inspektionsverfahren nach einem der vorangehenden Ansprüche, **gekennzeichnet durch** Anordnen der Kameras (36, 37, 38) in Umfangsrichtung (31) des Behälters (2) mit überlappenden Aufnahmebereichen und insbesondere Aufnehmen von zumindest zwei Teilbildern durch jede Kamera, wobei jedes Teilbild mittels einer anderen Strahlungsquelle, Strahlungsquellengruppe oder Einzelstrahlungsquelle aufgenommen wird.

13. Inspektionsverfahren nach einem der vorangehenden Ansprüche, **gekennzeichnet durch** Aufnehmen von wenigstens zwei Teilbildern mittels jeder Kamera bei individueller Beleuchtung pro Teilbild, und insbesondere Aufnehmen von wenigstens zwei Teilbilder hintereinander durch Belichten unterschiedlicher Zeilen für jedes Teilbild der Sensoreinheit der Kamera und Verarbeiten aller Teilbilder nach Aufnahme aller Teilbilder.

14. Inspektionsstation (1) im Bereich einer Fördereinrichtung (3) zur Förderung von transparenten oder transluzenten Behältern (2) entlang einer Förderrichtung (4) mit zumindest zwei Strahlungsquellen (8) für auf den Behälter zurichtende elektromagnetische Strahlung und einer Sensoreinheit (7) zur Erfassung von von einem ausgewählten Behälterbereich (6) reflektierter Strahlung, welche zur Bewertung eventueller Fehler des Behälters auswertbar ist, die Inspektionsstation (1) eine Transporteinrichtung (11) zur Bewegung zumindest eines Behälters (2) senkrecht zur Förderrichtung (4) aufweist, wobei zusätzlich zu einem solchen Anheben bzw. Absenken des Behälters die Fördereinrichtung zur synchronen Weiterbewegung des Behälters in Förderrichtung ausgebildet ist und der Behälter während des Anhebens bzw. Absenkens zeitlich sequenziell einer Bestrahlung durch zumindest zwei, auf insbesondere gegenüberliegenden Seiten des Behälters angeordnete Strahlungsquellen (8) ausgesetzt ist, und eine einer jeden Strahlungsquelle (8) jeweils zugeordnete Sensoreinheit (7) zur Erfassung von reflektierter Strahlung ausgebildet ist, wobei die Transporteinrichtung insbesondere eine Mehrzahl von Hubelementen (10) aufweist, die zumindest von gegenüberliegenden Seiten des Behälters (2) mit diesem in Kontakt bringbar sind und die Hubelemente (10) mittels einer Bewegungseinrichtung in einer geschlossenen Bahn seitlich zur Fördereinrichtung umlaufend ausgebildet sind.

15. Inspektionsstation nach Anspruch 14, **dadurch gekennzeichnet, dass** die Bewegungseinrichtung eine umlaufende Greiferkette (41) ist, relativ zu der eine Mehrzahl von Hubelementen (10) insbesondere vertikal verstellbar gelagert sind, wobei insbesondere die Hubelemente zumindest in einem Hubbahnabschnitt (13) synchron zur Fördereinrichtung (3) in Förderrichtung (4) bewegbar sind und die Hubelemente (10) wenigstens im Hubbahnabschnitt (13) in vertikaler Richtung verstellbar gelagert sind.

16. Inspektionsstation nach Anspruch 14 oder 15, **dadurch gekennzeichnet, dass** jedes Hubelement (10) einen Nockenfolger (20) aufweist, welcher entlang zumindest einer ersten Hubkontur (17) zum Anheben bzw. Absenken des Hubelements bewegbar ist, und insbesondere benachbart zur ersten Hubkontur (17) eine zweite Hubkontur (18) angeordnet ist, wobei die Hubkonturen phasenverschoben relativ zueinander angeordnet sind, und wobei die Hubelemente (10) zur Bewegung entlang der ersten oder zweiten Hubkontur (17, 18) ansteuerbar sind.

17. Inspektionsstation nach einem der vorangehenden Ansprüche 14 bis 16, **dadurch gekennzeichnet, dass** jedes Hubelement (10) als umlaufender Gurt ausgebildet ist, der einem Teil des Hubbahnabschnitts (13) zugeordnet ist, und zumindest benachbarte Hubelemente (10) synchron zueinander bewegbar sind.

18. Inspektionsstation nach einem der vorangehenden Ansprüche 14 bis 17 mit einer Belichtungs- und Auswertevorrichtung (30) zur Inspektion von transparenten oder transluzenten Behältern mit den zumindest zwei Strahlungsquellen (8) und der Sensoreinheit (7), wobei von den Strahlungsquellen abgegebene und anschließend vom Behälter reflektierte Strahlung von der Sensoreinheit erfassbar ist, wobei die Vorrichtung die zumindest zwei Strahlungsquellen (8) und diesen zugeordnete Kameras (36, 37, 38) mit entsprechenden Sensoreinheiten aufweist, wobei jede Strahlungsquelle und jede Kamera zur zeitlich sequenziellen Beleuchtung des Behälters und/oder Aufnahme eines Bildes durch die Kamera individuell ansteuerbar ist, wobei jede Strahlungsquelle (8) eine Mehrzahl von Einzelstrahlungsquellen (23) aufweist und die Einzelstrahlungsquelle eine LED ist, wobei verschiedenen Höhenbereichen (34, 35) des Behälters (2) verschiedene Kameras und/oder Kameragruppen (36, 37, 38) zugeordnet sind, und insbesondere durch jede Kamera eine Anzahl von Teilbildern aufnehmbar sind, wobei bei jedem Teilbild eine Bestrahlung des Behälters von einer anderen Strahlungsquelle durchführbar ist, und mehrere Kameras schräg oberhalb und schräg unterhalb des Behälters angeordnet sind, und insbesondere der Behälter kontinuierlich durch die Vorrichtung hindurch bewegbar ist, wobei Strahlungsquellen und Kameras im Wesentlichen in einem Halbraum (39, 40) oberhalb oder unterhalb des Behälters angeordnet und die Strahlungsquellen auf einen Durchmesser des Behälters fokussierbar sind.

19. Inspektionsstation nach einem der Ansprüche 14 bis 18 nach Anspruch 18, **durch gekennzeichnet**, dass Einzelstrahlungsquellen (23) einer Strahlungsquellengruppe (22) auf jeweils einen Punkt fokussiert sind.

20. Inspektionsstation nach einem der Ansprüche 14 bis 19, **dadurch gekennzeichnet, dass** die Vorrichtung (30) eine Ansteuerelektronik zum sequenziellen und/oder getakteten Betreiben der Strahlungsquellengruppen (22) und/oder zugeordneter Kameras (36, 37, 38) aufweist, wobei insbesondere Einzelstrahlungsquellen (23) einer Strahlungsquellengruppe (22) in Höhenrichtung (33) übereinander angeordnet sind, und Einzelstrahlungsquellen (23) einer und/oder unterschiedlicher Strahlungsquellengruppen (22) individuell ansteuerbar sind.

21. Inspektionsstation nach einem der Ansprüche 14 bis 20, **dadurch gekennzeichnet, dass** Einzelbilder mit Belichtungszeiten von maximal 100 µs von jeder Kamera aufnehmbar sind, und insbesondere Einzelbilder synchron zur Bestrahlung von einer zugeordneten Einzelstrahlungsquelle (23) oder Strahlungsquellengruppen (22) aufnehmbar sind.

22. Inspektionsstation nach einem der Ansprüche 14 bis 21, **dadurch gekennzeichnet, dass** hintereinander aufgenommene Teilbilder in unterschiedlichen Bereichen der Sensoreinheit (7) vor Auslesen und Auswerten abspeicherbar sind, und insbesondere in Umfangsrichtung (31) des Behälters (2) angeordnete Kameras überlappende Aufnahmebereiche aufweisen.

## Claims

1. Inspection method for examining transparent or translucent containers (2), in particular glass containers, for defects, such as fissures, cracks, bubbles or the like, wherein these containers are conveyed by a conveying device (3) continuously along a conveying direction (4) and, during the conveyance, each container runs through an inspection station (1), in which a contactless inspection of at least a selected container region (6) of each container takes place, wherein the selected container region is illuminated with electromagnetic radiation from at least two radiation sources (8), radiation reflected from the selected container region (8) is recorded by means of at least one sensor unit (7) and this reflected radiation is converted into inspection signals for the assessment of possible defects of the container,
comprising the following steps:
i) additional and temporary raising or lowering of at least one container (2) substantially perpendicularly to the conveying direction (4) for making the selected container region accessible in relation to adjacent containers for the illumination with the electromagnetic radiation;
ii) time-sequentially irradiating the selected container region (6) by the at least two radiation sources (8), arranged in particular on opposite sides of the container, during the raising or lowering of the at least one container;
iii) recording the radiation reflected by the at least one raised or lowered container by in each case at least one recording device (9), assigned to each radiation source, with a sensor unit, and
iv) conveying the container (2) further in the conveying direction (4) by means of the conveying device (3).

2. Inspection method according to Claim 1, **characterized by** raising or lowering the container (2) in step i) by means of lifting elements (10), engaging in particular on opposite sides of the container, and/or synchronously moving the lifting elements (10) with the conveying device (3) in the conveying direction (4).

3. Inspection method according to one of the preceding claims, **characterized by** moving a multiplicity of lifting elements (10) along a closed path (12) on both sides of the conveying device (3), with a lifting path portion (13) running along the conveying device and a return path portion (16) connecting the two ends (14, 15) of the lifting path portion (13), and in particular clamping the container (21) between the engaging lifting elements (10) substantially during the movement along the lifting path portion (13).

4. Inspection method according to one of the preceding claims, **characterized by** forcibly guiding each lifting element (10) along at least the lifting path portion (13) for raising or lowering the container, in particular forcibly guiding at least two lifting elements arranged one behind the other along at least the lifting path portion with a phase offset with respect to the synchronous raising or lowering of the container (2) by both lifting elements (10), and/or continuous raising or lowering of each lifting element (10) at least in the lifting path portion (13).

5. Inspection method according to one of the preceding claims, **characterized by** guiding the lifting element (10) along at least a first lifting contour (17) for raising or lowering, and in particular selectively guiding the lifting element (10) along the first lifting contour or a second lifting contour (18) phase-offset with respect to the first lifting contour.

6. Inspection method according to one of the preceding claims, **characterized by** activating lifting elements (10) arranged one behind the other for guidance along the first or second lifting contour (17, 18) in a way corresponding to the detected position of each container, in particular as it enters the lifting path portion (13).

7. Inspection method according to one of the preceding claims, **characterized by** irradiating in step ii) by means of a radiation source (8) comprising a plurality of individual radiation sources (23) forming a radiation group (22), with in particular the same focusing, and in particular arranging the radiation sources or radiation source groups in a half-space (39, 40) assigned to the raising or lowering of the container.

8. Inspection method according to one of the preceding claims, **characterized by** illuminating the surface of the selected container region (6) that is facing the respective radiation source group (22) and detecting the reflected radiation by a camera (36, 37, 38), assigned to the respective radiation source group (22), with an optoelectronic sensor unit.

9. Inspection method according to one of the preceding claims, **characterized by** moving each group carrier (25) with a radiation source group (22) for focusing all of the individual radiation sources of the carrier on a surface of the container (2) in a way corresponding to the diameter thereof, and in particular sequentially illuminating the container (2) along the circumferential direction (31) thereof by a plurality of radiation source groups (22).

10. Inspection method according to one of the preceding claims, **characterized by** dividing a radiation source group (22) into subgroups and illuminating the container from different angles of elevation by means of each subgroup, wherein in particular different radiation source groups (22) or respective subgroups are coupled for the joint illumination of a container region (6).

11. Inspection method according to one of the preceding claims, **characterized by** synchronously illuminating and exposing by in each case a radiation source group (22) or groups and an assigned camera or cameras (36, 37, 38) and/or time-sequentially irradiating and synchronously recording an image in the circumferential direction (31) of the container for forming a recording sequence.

12. Inspection method according to one of the preceding claims, **characterized by** arranging the cameras (36, 37, 38) in the circumferential direction (31) of the container (2) with overlapping recording regions and in particular recording at least two part-images by each camera, wherein each part-image is recorded by means of another radiation source, radiation source group or individual radiation source.

13. Inspection method according to one of the preceding claims, **characterized by** recording at least two part-images by means of each camera with individual illumination of each part-image, and in particular recording at least two part-images one behind the other by exposing different lines for each part-image of the sensor unit of the camera and processing all of the part-images after recording all of the part-images.

14. Inspection station (1) in the region of a conveying device (3) for conveying transparent or translucent containers (2) along a conveying direction (4) with at least two radiation sources (8) for electromagnetic radiation directed at the container and a sensor unit (7) for detecting radiation reflected by a selected container region (6), which can be evaluated for the assessment of possible defects of the container, the inspection station (1) has a transporting device (11) for moving at least one container (2) perpendicularly to the conveying direction (4), wherein, in addition to such raising or lowering of the container, the conveying device is designed for synchronous further movement of the container in the conveying direction and, during the raising or lowering, the container is exposed time-sequentially to an irradiation by at least two radiation sources (8) arranged in particular on opposite sides of the container, and a sensor unit (7), respectively assigned to each and every radiation source (8), is designed for detecting reflected radiation, wherein the transporting device has in particular a plurality of lifting elements (10), which can be brought into contact with the container (2) at least from opposite sides thereof, and the lifting elements (10) are designed as circulating in a closed path laterally in relation to the conveying device by means of a moving device.

15. Inspection station according to Claim 14, **characterized in that** the moving device is a circulating gripper chain (41), relative to which a plurality of lifting elements (10) are mounted in particular vertically adjustably, wherein in particular the lifting elements are movable, at least in a lifting path portion (13), synchronously in relation to the conveying device (3) in the conveying direction (4) and the lifting elements (10) are mounted adjustably in the vertical direction, at least in the lifting path portion (13).

16. Inspection station according to Claim 14 or 15, **characterized in that** each lifting element (10) has a cam follower (20), which is movable along at least a first lifting contour (17) for raising or lowering the lifting element, and in particular a second lifting contour (18) is arranged adjacent to the first lifting contour (17), wherein the lifting contours are arranged phase-shifted in relation to one another, and wherein the lifting elements (10) are activatable for movement along the first or second lifting contour (17, 18).

17. Inspection station according to one of the preceding Claims 14 to 16, **characterized in that** each lifting element (10) is designed as a circulating belt, which is assigned to part of the lifting path portion (13), and at least adjacent lifting elements (10) are movable synchronously in relation to one another.

18. Inspection station according to one of the preceding Claims 14 to 17 with an exposing and evaluating device (30) for the inspection of transparent or translucent containers with the at least two radiation sources (8) and the sensor unit (7), wherein radiation emitted by the radiation sources and subsequently reflected by the container can be detected by the sensor unit, wherein the device has the at least two radiation sources (8) and cameras (36, 37, 38), assigned thereto, with corresponding sensor units, wherein each radiation source and each camera is individually activatable for the time-sequential illumination of the container and/or recording of an image by the camera, wherein each radiation source (8) has a plurality of individual radiation sources (23) and the individual radiation source is an LED, wherein different height regions (34, 35) of the container (2) are assigned different cameras and/or camera groups (36, 37, 38), and in particular a number of part-images can be recorded by each camera, wherein, for each part-image, an irradiation of the container can be carried out by a different radiation source, and a number of cameras are arranged obliquely above and obliquely below the container, and in particular the container can be moved continuously through the device, wherein radiation sources and cameras are arranged substantially in a half-space (39, 40) above or below the container and the radiation sources can be focused on a diameter of the container.

19. Inspection station according to one of Claims 14 to 18 according to Claim 18, **characterized in that** individual radiation sources (23) of a radiation source group (22) are focused on one point in each case.

20. Inspection station according to one of Claims 14 to 19, **characterized in that** the device (30) has activation electronics for the sequential and/or clocked operation of the radiation source groups (22) and/or assigned cameras (36, 37, 38), wherein in particular individual radiation sources (23) of a radiation source group (22) are arranged one above the other in the height direction (33), and individual radiation sources (23) of a and/or different radiation source groups (22) are individually activatable.

21. Inspection station according to one of Claims 14 to 20, **characterized in that** individual images can be recorded by each camera with maximum exposure times of 100 µs, and in particular individual images can be recorded synchronously with the irradiation of an assigned individual radiation source (23) or radiation source groups (22).

22. Inspection station according to one of Claims 14 to 21, **characterized in that** part-images recorded one after the other can be stored in different regions of the sensor unit (7) before reading out and evaluation, and in particular cameras arranged in the circumferential direction (31) of the container (2) have overlapping recording regions.

## Revendications

1. Procédé d'inspection pour contrôler des récipients transparents ou translucides (2), en particulier des récipients en verre, pour déceler des défauts tels que des crevasses, des fissures, des bulles ou similaires, ces récipients étant transportés en continu depuis un dispositif de transport (3) le long d'une direction de transport (4) et pendant le transport, chaque récipient passant par un poste d'inspection (1) dans lequel a lieu une inspection sans contact d'au moins une région sélectionnée du récipient (6) de chaque récipient, la région sélectionnée du récipient étant irradiée avec un rayonnement électromagnétique provenant d'au moins deux sources de rayonnement (8), le rayonnement réfléchi par la région sélectionnée du récipient (8) étant reçu au moyen d'au moins une unité de capteur (7) et étant converti en signaux d'inspection en vue de l'évaluation de défauts éventuels du récipient,
le procédé comprenant les étapes suivantes :
i) soulèvement et/ou abaissement supplémentaire et temporaire d'au moins un récipient (2) essentiellement perpendiculairement à la direction de transport (4) pour permettre d'accéder à la région sélectionnée du récipient par rapport aux récipients adjacents en vue d'effectuer l'irradiation avec le rayonnement électromagnétique ;
ii) irradiation séquentielle dans le temps de la région sélectionnée du récipient (6) par les au moins deux sources de rayonnement (8) disposées notamment sur des côtés opposés du récipient pendant le soulèvement et/ou l'abaissement de l'au moins un récipient ;
iii) enregistrement du rayonnement réfléchi par l'au moins un récipient soulevé et/ou abaissé par au moins un dispositif d'enregistrement respectif (9) associé à chaque source de rayonnement avec l'unité de capteur, et
iv) transport ultérieur du récipient (2) dans la direction de transport (4) au moyen du dispositif de transport (3).

2. Procédé d'inspection selon la revendication 1, **caractérisé par** le soulèvement ou l'abaissement du récipient (2) à l'étape i) au moyen d'éléments de levage (10) agissant notamment au niveau de côtés opposés du récipient et/ou par un déplacement synchronisé des éléments de levage (10) avec le dispositif de transport (3) dans la direction de transport (4).

3. Procédé d'inspection selon l'une quelconque des revendications précédentes, **caractérisé par** le déplacement d'une pluralité d'éléments de levage (10) le long d'une trajectoire fermée (12) de part et d'autre du dispositif de transport (3) avec une portion de trajectoire de levage (13) s'étendant le long du dispositif de transport et une portion de trajectoire de retour (16) reliant les deux extrémités (14, 15) de la portion de trajectoire de levage (13), et notamment par le serrage du récipient (21) entre les éléments de levage en prise (10) essentiellement pendant le déplacement le long de la portion de trajectoire de levage (13).

4. Procédé d'inspection selon l'une quelconque des revendications précédentes, **caractérisé par** un guidage forcé de chaque élément de levage (10) le long d'au moins la portion de trajectoire de levage (13) pour soulever et/ou abaisser le récipient, en particulier par un guidage forcé d'au moins deux éléments de levage disposés l'un derrière l'autre le long d'au moins la portion de trajectoire de levage avec un décalage de phase en vue du soulèvement et/ou de l'abaissement synchronisé du récipient (2) par les deux éléments de levage (10), et/ou par un soulèvement et/ou un abaissement continu de chaque élément de levage (10) au moins dans la portion de trajectoire de levage (13).

5. Procédé d'inspection selon l'une quelconque des revendications précédentes, **caractérisé par** le guidage de l'élément de levage (10) le long d'au moins un premier contour de levage (17) pour le soulèvement et/ou l'abaissement, et notamment par un guidage sélectif de l'élément de levage (10) le long du premier contour de levage ou d'un deuxième contour de levage (18) déphasé par rapport au premier contour de levage.

6. Procédé d'inspection selon l'une quelconque des revendications précédentes, **caractérisé par** la commande d'éléments de levage (10) disposés les uns derrière les autres pour le guidage le long du premier ou du deuxième contour de levage (17, 18) de manière correspondant à la position détectée de chaque récipient, notamment à son entrée dans la portion de trajectoire de levage (13).

7. Procédé d'inspection selon l'une quelconque des revendications précédentes, **caractérisé par** une irradiation à l'étape ii) au moyen d'une source de rayonnement (8) provenant d'une pluralité de sources de rayonnement individuelles (23) formant un groupe de rayonnement (22), avec notamment la même focalisation et notamment un agencement des sources de rayonnement ou des groupes de sources de rayonnement dans un demi-espace (39, 40) associé au soulèvement et/ou à l'abaissement du récipient.

8. Procédé d'inspection selon l'une quelconque des revendications précédentes, **caractérisé par** les radiations d'une surface de la région sélectionnée du récipient (6) tournée vers le groupe de sources de rayonnement respectif (22) et détection du rayonnement réfléchi par une caméra (36, 37, 38) associée au groupe de sources de rayonnement (22) respectif avec une unité de capteur optoélectronique.

9. Procédé d'inspection selon l'une quelconque des revendications précédentes, **caractérisé par** le déplacement de chaque support de groupe (25) avec un groupe de sources de rayonnement (22) pour la focalisation de toutes les sources de rayonnement individuelles du support sur une surface du récipient (2) correspondant à son diamètre, et notamment l'irradiation séquentielle du récipient (2) le long de sa direction périphérique (31) par une pluralité de groupes de sources de rayonnement (22).

10. Procédé d'inspection selon l'une quelconque des revendications précédentes, **caractérisé par** la division d'un groupe de sources de rayonnement (22) en sous-groupes et l'irradiation du récipient à partir d'angles de hauteur différents au moyen de chaque sous-groupe respectif, différents groupes de sources de rayonnement (22) ou des sous-groupes respectifs étant notamment accouplés pour effectuer une irradiation commune d'une région du récipient (6).

11. Procédé d'inspection selon l'une quelconque des revendications précédentes, **caractérisé par** une irradiation et un éclairage synchrone par un ou plusieurs groupes de sources de rayonnement (22) respectifs et une ou plusieurs caméras associées (36, 37, 38) et/ou irradiation séquentielle et enregistrement synchrone d'une image dans la direction périphérique (31) du récipient pour former une séquence d'enregistrement.

12. Procédé d'inspection selon l'une quelconque des revendications précédentes, **caractérisé par** l'agencement des caméras (36, 37, 38) dans la direction périphérique (31) du récipient (2) avec des régions d'enregistrement se chevauchant et notamment enregistrement d'au moins deux images partielles par chaque caméra, chaque image partielle étant enregistrée au moyen d'une autre source de rayonnement, d'un autre groupe de sources de rayonnement ou d'une source de rayonnement individuelle.

13. Procédé d'inspection selon l'une quelconque des revendications précédentes, **caractérisé par** l'enregistrement d'au moins deux images partielles au moyen de chaque caméra pour chaque irradiation individuelle par image partielle, et notamment enregistrement d'au moins deux images partielles l'une après l'autre par éclairage de lignes différentes pour chaque image partielle de l'unité de capteur de la caméra et traitement de toutes les images partielles après enregistrement de toutes les images partielles.

14. Poste d'inspection (1) dans la région d'un dispositif de transport (3) pour transporter des récipients transparents ou translucides (2) le long d'une direction de transport (4), comprenant au moins deux sources de rayonnement (8) pour un rayonnement électromagnétique orienté vers les récipients et une unité de capteur (7) pour détecter un rayonnement réfléchi par une région sélectionnée du récipient (6), qui peut être analysé pour évaluer la présence de défauts éventuels du récipient, le poste d'inspection (1) présente un dispositif de transfert (11) pour le déplacement d'au moins un récipient (2) perpendiculairement à la direction de transport (4), le dispositif de transport étant réalisé pour effectuer, en plus d'un tel soulèvement et/ou abaissement du récipient, un déplacement supplémentaire du récipient dans la direction de transport et le récipient, pendant le soulèvement et/ou l'abaissement, étant exposé séquentiellement dans le temps à une irradiation par au moins deux sources de rayonnement (8) disposées notamment sur des côtés opposés du récipient, et une unité de capteur (7) à chaque fois associée à chaque source de rayonnement (8) étant réalisée pour détecter le rayonnement réfléchi, le dispositif de transfert présentant notamment une pluralité d'éléments de levage (10) qui peuvent être amenés en contact au moins depuis des côtés opposés du récipient (2) avec ce dernier et les éléments de levage (10) étant réalisés de manière à se déplacer circonférentiellement sur une trajectoire fermée latéralement au dispositif de transport au moyen d'un dispositif de déplacement.

15. Poste d'inspection selon la revendication 14, **caractérisé en ce que** le dispositif de déplacement est une chaîne d'éléments de préhension en circulation (41), par rapport à laquelle une pluralité d'éléments de levage (10) sont supportés de manière notamment déplaçable verticalement, les éléments de levage pouvant notamment être déplacés au moins dans une portion de trajectoire de levage (13) de manière synchronisée avec le dispositif de transport (3) dans la direction de transport (4) et les éléments de levage (10) étant supportés de manière déplaçable dans la direction verticale au moins dans la portion de trajectoire de levage (13).

16. Poste d'inspection selon la revendication 14 ou 15, **caractérisé en ce que** chaque élément de levage (10) présente un suiveur de came (20) qui peut être déplacé le long d'au moins un premier contour de levage (17) pour le soulèvement et/ou l'abaissement de l'élément de levage, et un deuxième contour de levage (18) est notamment disposé en position adjacente au premier contour de levage (17), les contours de levage étant disposés de manière déphasée l'un par rapport à l'autre et les éléments de levage (10) pouvant être commandés pour se déplacer le long du premier ou du deuxième contour de levage (17, 18).

17. Poste d'inspection selon l'une quelconque des revendications précédentes 14 à 16, **caractérisé en ce que** chaque élément de levage (10) est réalisé sous forme de courroie entraînée en circulation, qui est associée à une partie de la portion de trajectoire de levage (13) et au moins des éléments de levage adjacents (10) peuvent être déplacés de manière synchronisée les uns par rapport aux autres.

18. Poste d'inspection selon l'une quelconque des revendications précédentes 14 à 17, comprenant un dispositif d'éclairage et d'analyse (30) pour l'inspection de récipients transparents ou translucides avec les au moins deux sources de rayonnement (8) et l'unité de capteur (7), le rayonnement émis par les sources de rayonnement et ensuite réfléchi par le récipient pouvant être détecté par l'unité de capteur, le dispositif présentant les au moins deux sources de rayonnement (8) et des caméras (36, 37, 38) associées à celles-ci avec des unités de capteur correspondantes, chaque source de rayonnement et chaque caméra pouvant être commandées individuellement pour irradier séquentiellement dans le temps le récipient et/ou pour enregistrer une image par la caméra, chaque source de rayonnement (8) présentant une pluralité de sources de rayonnement individuelles (23) et la source de rayonnement individuelle étant une DEL, différentes régions en hauteur (34, 35) du récipient (2) étant associées à différentes caméras et/ou différents groupes de caméras (36, 37, 38), et notamment un certain nombre d'images partielles pouvant être enregistrées par chaque caméra, pour chaque image partielle une irradiation du récipient pouvant être effectuée par une autre source de rayonnement, et plusieurs caméras étant disposées obliquement au-dessus et obliquement en dessous du récipient, et notamment le récipient pouvant être déplacé en continu à travers le dispositif, des sources de rayonnement et des caméras étant disposées essentiellement dans un demi-espace (39, 40) au-dessus ou en dessous du récipient et les sources de rayonnement pouvant être focalisées sur un diamètre du récipient.

19. Poste d'inspection selon l'une quelconque des revendications 14 à 18 selon la revendication 18, **caractérisé en ce que** des sources de rayonnement individuelles (23) d'un groupe de sources de rayonnement (22) sont focalisées à chaque fois sur un point.

20. Poste d'inspection selon l'une quelconque des revendications 14 à 19, **caractérisé en ce que** le dispositif (30) présente une électronique de commande pour faire fonctionner séquentiellement et/ou de manière cadencée les groupes de sources de rayonnement (22) et/ou les caméras associées (36, 37, 38), en particulier des sources de rayonnement individuelles (23) d'un groupe de sources de rayonnement (22) étant disposées les unes au-dessus des autres dans la direction en hauteur (33) et des sources de rayonnement individuelles (23) d'un et/ou de différents groupes de sources de rayonnement (22) pouvant être commandées individuellement.

21. Poste d'inspection selon l'une quelconque des revendications 14 à 20, **caractérisé en ce que** des images individuelles avec des temps d'éclairage de 100 µs au maximum peuvent être enregistrées par chaque caméra, et en particulier des images individuelles peuvent être enregistrées de manière synchronisée avec l'irradiation par une source de rayonnement individuelle associée (23) ou par des groupes de sources de rayonnement (22).

22. Poste d'inspection selon l'une quelconque des revendications 14 à 21, **caractérisé en ce que** des images partielles enregistrées les unes après les autres dans des régions différentes de l'unité de capteur (7) peuvent être mémorisées avant la lecture et l'analyse, et notamment des caméras disposées dans la direction périphérique (31) du récipient (2) présentent des régions d'enregistrement se chevauchant.
